(19) Europäisches Patentamt
European Patent Office
Office européen des brevets

(11) EP 4 215 592 A1

(12) **EUROPEAN PATENT APPLICATION**
published in accordance with Art. 153(4) EPC

(43) Date of publication:
**26.07.2023 Bulletin 2023/30**

(21) Application number: **21869456.0**

(22) Date of filing: **17.09.2021**

(51) International Patent Classification (IPC):
***C09D 5/02*** *(2006.01)* ***C09D 175/04*** *(2006.01)*
***C09J 175/04*** *(2006.01)* ***C08G 18/80*** *(2006.01)*
***D06M 13/395*** *(2006.01)*

(52) Cooperative Patent Classification (CPC):
**C08G 18/80; C09D 5/02; C09D 175/04; C09J 175/04; D06M 13/395**

(86) International application number:
**PCT/JP2021/034284**

(87) International publication number:
**WO 2022/059774 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2020 JP 2020157120**

(71) Applicant: **Mitsui Chemicals, Inc.**
**Tokyo 104-0028 (JP)**

(72) Inventors:
- **SHINOHARA, Naoki**
  **Sodegaura-shi, Chiba 299-0265 (JP)**
- **SHIBATA, Tatsuya**
  **Sodegaura-shi, Chiba 299-0265 (JP)**
- **FUKUDA, Kazuyuki**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **WATER-DISPERSIBLE BLOCKED ISOCYANATE, FIBER-TREATING AGENT, WATER REPELLENT, COATING COMPOSITION, AND ADHESIVE**

(57) A blocked isocyanate has an isocyanate group of a polyisocyanate compound blocked with one or more blocking agents including a first blocking agent, which is represented by general formula (1). At least some of the first blocking agent has been neutralized with acid.

EP 4 215 592 A1

[Chemical Formula 1]

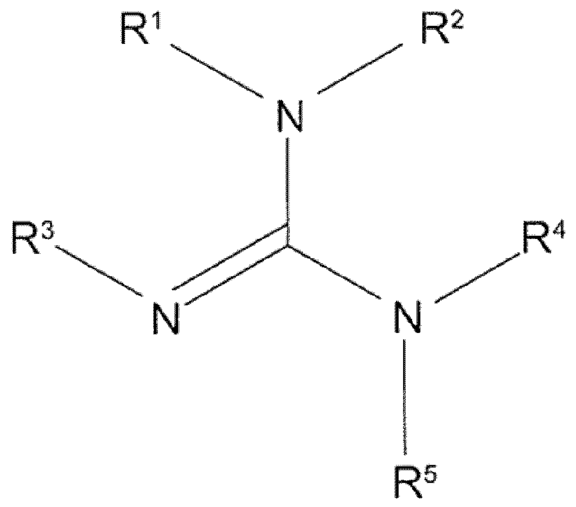

(1)

(wherein $R^1$ to $R^5$ each represent a hydrogen atom or a hydrocarbon group having 1 to 12 carbon atoms; $R^1$ and $R^3$ may be bonded to each other to form a heterocycle, $R^4$ and $R^1$ may be bonded to each other to form a heterocycle, and $R^5$ and $R^3$ may be bonded to each other to form a heterocycle).

## Description

### TECHNICAL FIELD

The present invention relates to a water-dispersible blocked isocyanate, a fiber-treating agent, a water repellent, a coating composition, and an adhesive.

### BACKGROUND ART

Conventionally, blocked isocyanate, in which the isocyanate group is blocked with a blocking agent, has been known. For example, in the production of resin, blocked isocyanate is mixed with an active hydrogen group-containing compound, followed by heating. This causes the blocking agent to dissociate from the isocyanate group, resulting in regeneration of the isocyanate group. Thus, the isocyanate group reacts with the active hydrogen group-containing compound.

Further, a water-dispersible blocked isocyanate, which is dispersed in water before use, has been considered in place of blocked isocyanate, which is dissolved in an organic solvent before use in order to reduce the use of organic solvents.

For example, blocked polyisocyanate has been proposed which has both an isocyanate group blocked by a pyrazole compound and a cationic group introduced by dimethyl ethanolamine in the same molecule (for example, see Patent Document 1 (Example 1)).

### Citation List

### Patent Document

Patent Document 1: Japanese Unexamined Patent Publication No. 2010-59089

### SUMMARY OF THE INVENTION

### PROBLEM TO BE SOLVED BY THE INVENTION

In recent years, in view of reduction in energy and low cost, reduction in temperature for causing the blocking agent to dissociate from the isocyanate group, that is, low temperature curing properties of the blocked isocyanate have been desired.

However, the blocked polyisocyanate described in Patent Document 1 cannot sufficiently secure the low temperature curing properties. The water-dispersible blocked isocyanate is required to be able to be stably stored in a water dispersed state.

The present invention provides a water-dispersible blocked isocyanate, a fiber-treating agent, a water repellent, a coating composition, and an adhesive that are excellent in low temperature curing properties and storage stability.

### MEANS FOR SOLVING THE PROBLEM

The present invention [1] includes a water-dispersible blocked isocyanate being a blocked isocyanate obtained by blocking an isocyanate group of a polyisocyanate compound with a blocking agent, in which the blocking agent contains a first blocking agent represented by general formula (1), and at least some of the first blocking agent has been neutralized with acid.

[Chemical Formula 1]

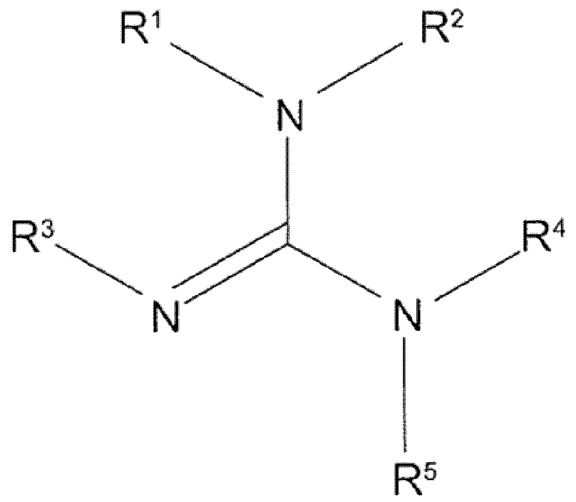

(1)

(in the formula, $R^1$ to $R^5$ each represent a hydrogen atom or a hydrocarbon group having 1 to 12 carbon atoms, $R^1$ and $R^3$ may be bonded to each other to form a heterocycle, $R^4$ and $R^1$ may be bonded to each other to form a heterocycle, and $R^5$ and $R^3$ may be bonded to each other to form a heterocycle).

The present invention [2] includes the water-dispersible blocked isocyanate described in [1] above, in which in the general formula (1), $R^1$ to $R^5$ each represent a hydrogen atom or a hydrocarbon group having 1 to 12 carbon atoms.

The present invention [3] includes the water-dispersible blocked isocyanate described in [1] or [2] above, in which the blocking agent further contains a second blocking agent having a lower catalytic activity that activates an isocyanate group than that of the first blocking agent.

The present invention [4] includes the water-dispersible blocked isocyanate described in [3] above, in which the first blocking agent in the blocking agent has a content of more than 2 mol% and less than 80 mol%.

The present invention [5] includes the water-dispersible blocked isocyanate described in any one of the above-described [1] to [4], in which the acid contains an organic acid.

The present invention [6] includes the water-dispersible blocked isocyanate described in [5] above, in which the acid contains at least one kind of organic acid selected from the group consisting of acetic acid, propionic acid, and lactic acid.

The present invention [7] includes the water-dispersible blocked isocyanate described in any one of the above-described [1] to [6], in which the polyisocyanate compound contains an aromatic polyisocyanate derivative and/or an araliphatic polyisocyanate derivative.

The present invention [8] includes a fiber-treating agent containing the water-dispersible blocked isocyanate described in any one of the above-described [1] to [7].

The present invention [9] includes a water repellent containing the water-dispersible blocked isocyanate described in any one of the above-described [1] to [7].

The present invention [10] includes a coating composition containing the water-dispersible blocked isocyanate described in any one of the above-described [1] to [7].

The present invention [11] includes an adhesive containing the water-dispersible blocked isocyanate described in any one of the above-described [1] to [7].

EFFECTS OF THE INVENTION

In the water-dispersible blocked isocyanate of the present invention, at least some of the first blocking agent represented by the above-described general formula (1) has been neutralized with acid. This allows the water-dispersible blocked isocyanate to be smoothly dispersed in water and to maintain the water dispersed state for a long time. Further, in the water-dispersible blocked isocyanate, at least some of the first blocking agent is dissociated from the isocyanate group at relatively low temperature.

Therefore, the water-dispersible blocked isocyanate is excellent in low temperature curing properties and storage stability.

The fiber-treating agent, water repellent, coating composition, and adhesive of the present invention each

include the above-described water-dispersible blocked isocyanate. Therefore, the fiber-treating agent, the water repellent, the coating composition, and the adhesive are excellent in low temperature curing properties and storage stability.

DESCRIPTION OF THE EMBODIMENTS

A water-dispersible blocked isocyanate is blocked isocyanate, in which the isocyanate group of a polyisocyanate compound is blocked with a blocking agent. In the water-dispersible blocked isocyanate, at least some of the blocking agent that blocks the isocyanate group has been neutralized with acid. The water-dispersible blocked isocyanate is used, for example, dispersed in water.

In the following, when the blocking agent is not neutralized with acid, the water-dispersible blocked isocyanate is simply referred to as "blocked isocyanate" to distinguish from the "water-dispersible blocked isocyanate".

The blocked isocyanate is a reaction product of a polyisocyanate compound and a blocking agent.

(1) Polyisocyanate compound

For the polyisocyanate compound, for example, polyisocyanate monomer and polyisocyanate derivative are used.

For the polyisocyanate monomer, for example, aliphatic polyisocyanate, aromatic polyisocyanate, and araliphatic polyisocyanate are used.

Examples of the aliphatic polyisocyanate include ethylenediisocyanate, trimethylenediisocyanate, 1,4-tetramethylenediisocyanate, 1,5-pentamethylene diisocyanate, 1,6-hexamethylene diisocyanate, trimethylhexamethylene diisocyanate, and 2,6-diisocyanatemethylcaproate.

For the aliphatic polyisocyanate monomer, an alicyclic polyisocyanate monomer is also used.

Examples of the alicyclic polyisocyanate monomer include 1,3-cyclopentane diisocyanate, 1,3-cyclopentene diisocyanate, 1,4-cyclohexane diisocyanate, 1,3-cyclohexane diisocyanate, 3-isocyanatomethyl-3,5,5-trimethylcyclohexyl isocyanate, methylenebis(cyclohexylisocyanate), methyl-2,4-cyclohexane diisocyanate, methyl-2,6-cyclohexane diisocyanate, norbornane diisocyanate, 1,3-bis(isocyanatomethyl)cyclohexane and 1,4-bis(isocyanatomethyl)cyclohexane.

Examples of the aromatic polyisocyanate include tolylene diisocyanate, phenylene diisocyanate, 4,4'-diphenyl diisocyanate, 1,5-naphthalene diisocyanate, diphenylmethane diisocyanate, 4,4'-toluidine diisocyanate, and 4,4'-diphenylether diisocyanate.

Examples of the araliphatic polyisocyanate include xylylene diisocyanate, tetramethylxylylene diisocyanate, and co,co'-diisocyanate-1,4-diethylbenzene.

The polyisocyanate derivative is derived from the above-described polyisocyanate monomer. Examples of the polyisocyanate derivative include isocyanurate-modified product, iminooxadiazinedione-modified product, triol adduct, allophanate-modified product, biuret-modified product, urea-modified product, oxadiazinetrione-modified product, carbodiimide-modified product, uretdione-modified product, and uretonimine-modified product.

The polyisocyanate compound preferably contains a polyisocyanate derivative, and more preferably consists of a polyisocyanate derivative.

For the polyisocyanate derivative, preferably, an aliphatic polyisocyanate derivative derived from aliphatic polyisocyanate, an aromatic polyisocyanate derivative derived from aromatic polyisocyanate, and an araliphatic polyisocyanate derivative derived from araliphatic polyisocyanate are used, more preferably, an aromatic polyisocyanate derivative and an araliphatic polyisocyanate derivative are used, further preferably, an araliphatic polyisocyanate derivative is used.

For the aliphatic polyisocyanate derivative, further preferably, an isocyanurate-modified product of aliphatic polyisocyanate is used, particularly preferably, an isocyanurate-modified product of 1,6-hexamethylene diisocyanate is used.

For the aromatic polyisocyanate derivative, further preferably, an isocyanurate-modified product of aromatic polyisocyanate is used, particularly preferably, an isocyanurate-modified product of tolylene diisocyanate is used.

For the araliphatic polyisocyanate derivative, further preferably, an isocyanurate-modified product of araliphatic polyisocyanate is used, particularly preferably, an isocyanurate-modified product of xylylene diisocyanate is used.

The polyisocyanate compound may be modified with a hydrophilic compound containing an active hydrogen group, and a cationic hydrophilic group and a nonionic hydrophilic group can also be used in combination.

The hydrophilic compound has an active hydrogen group and a hydrophilic group. For the hydrophilic compound, for example, a nonionic hydrophilic compound is used, preferably, a polyoxyethylene compound is used. The polyoxyethylene compound has at least three continuous oxyethylene groups.

Examples of the polyoxyethylene compound include polyoxyethylene group-containing polyol, polyoxyethylene group-containing polyamine, one-end-terminated polyoxyethylene glycol, and one-end-terminated polyoxyethylene diamine.

The polyoxyethylene compounds can be used alone or in combination of two or more.

The polyoxyethylene compound preferably contains one-end-terminated polyoxyethylene glycol, more preferably contains monoalkoxypolyoxyethylene glycol.

One end of the monoalkoxypolyoxyethylene glycol is, for example, capped with an alkyl group having 1 to 20 carbon atoms. A hydroxyl group is positioned at the other end of the monoalkoxypolyoxyethylene glycol.

For the monoalkoxypolyoxyethylene glycol, for example, methoxypolyoxyethylene glycol and ethoxypolyoxyethylene glycol are used, preferably, methoxypolyoxyethylene glycol is used.

The polyoxyethylene compound has a number average molecular weight of, for example, 200 or more, preferably 400 or more, and for example, 2000 or less, preferably 1500 or less. The number average molecular weight of the polyoxyethylene compound can be measured by gel permeation chromatography.

When the polyisocyanate compound is modified with the hydrophilic compound, the above-described polyisocyanate monomer and/or polyisocyanate derivative is/are allowed to react with the above-described hydrophilic compound at a ratio at which a free isocyanate group remains.

The ratio of the active hydrogen group of the hydrophilic compound, relative to 100 mol of the isocyanate group of the unmodified polyisocyanate compound, is, for example, 0.5 mol or more, preferably 1 mol or more, and for example, 10 mol or less, preferably 5 mol or less.

These polyisocyanate compounds can be used alone or in combination of two or more.

The average functionality of the isocyanate group in the polyisocyanate compound is, for example, 2 or more, preferably 2.5 or more, and for example, 4 or less, preferably 3.5 or less.

In the polyisocyanate compound, the isocyanate group content (NCO%) is, for example, 5 mass% or more, preferably 7 mass% or more, and for example, 30 mass% or less, preferably 25 mass% or less.

(2) Blocking agent

The blocking agent contains at least a first blocking agent. Therefore, the blocked isocyanate contains at least a first latent isocyanate group in which the isocyanate group is blocked with the first blocking agent.

(2-1) First blocking agent

The first blocking agent inactivates the isocyanate group by blocking, while the first blocking agent has a catalytic activity that activates the isocyanate group under a state where the isocyanate group is blocked or de-blocked. The catalytic activity will be described later.

The first blocking agent is represented by the following general formula (1). The first blocking agent is a guanidine compound having a guanidine skeleton.

[Chemical Formula 2]

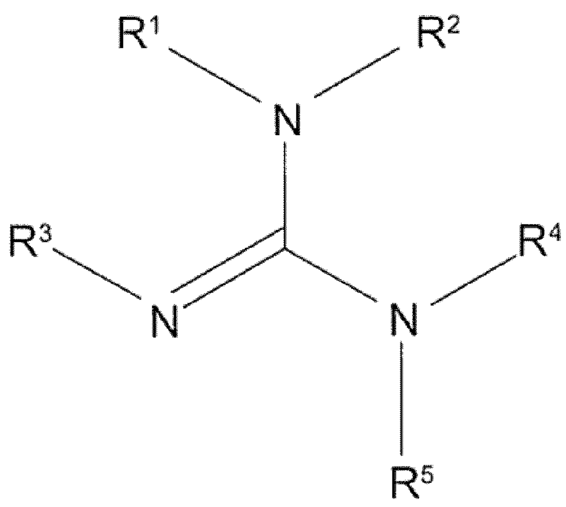

(1)

(in the formula, $R^1$ to $R^5$ each represent a hydrogen atom or a hydrocarbon group having 1 to 12 carbon atoms, $R^1$ and $R^3$ may be bonded to each other to form a heterocycle, $R^4$ and $R^1$ may be bonded to each other to form a heterocycle, and $R^5$ and $R^3$ may be bonded to each other to form a heterocycle).

In the above-described general formula (1), $R^1$ to $R^5$ may be the same or different from each other. $R^1$ to $R^5$ each represent a hydrogen atom or a hydrocarbon group having 1 to 12 carbon atoms. At least one of $R^1$ to $R^5$ preferably represents a hydrogen atom.

For the hydrocarbon group having 1 to 12 carbon atoms represented by $R^1$ to $R^5$, for example, an alkyl group having 1 to 12 carbon atoms, and an aryl group having 6 to 12 carbon atoms are used.

For the alkyl group having 1 to 12 carbon atoms, for example, a chain alkyl group having 1 to 12 carbon atoms and a cyclic alkyl group having 3 to 12 carbon atoms are used.

For the chain alkyl group having 1 to 12 carbon atoms, a straight chain or branched chain alkyl group having 1 to 12 carbon atoms is used, and for example, methyl, ethyl, propyl, isopropyl, butyl, isobutyl, sec-butyl, tert-butyl, pentyl, isopentyl, tert-pentyl, hexyl, heptyl, octyl, nonyl, isononyl, decyl, undecyl, and dodecyl are used.

For the cyclic alkyl group having 3 to 12 carbon atoms, for example, cyclopropyl, cyclobutyl, cyclopentyl, cyclohexyl, cycloheptyl, cyclooctyl, cyclononyl, cyclodecyl, and cyclododecyl are used.

For the aryl group having 6 to 12 carbon atoms, for example, phenyl, tolyl, xylyl, naphthyl, azulenyl, and biphenyl are used.

The hydrocarbon group having 1 to 12 carbon atoms may be the same or different from each other in $R^1$ to $R^5$.

$R^1$ and $R^3$ can be bonded to each other to form a heterocycle.

The heterocycle formed by $R^1$ and $R^3$ bonded to each other is a nitrogen-containing heterocycle having a -N=C-N- structure, and for example, a heterocycle with 3 to 20-membered ring, preferably 3 to 10-membered ring, more preferably 3 to 8-membered ring, further preferably 5 to 7-membered ring are used. The heterocycle may be, for example, monocyclic or a polycyclic in which a plurality of monocyclics share a side. The heterocycle may be a conjugated heterocycle.

$R^4$ and $R^1$ can be bonded to each other to form a heterocycle, and $R^5$ and $R^3$ can be bonded to each other to form a heterocycle.

The heterocycle formed from $R^1$, $R^3$, $R^4$, and $R^5$ may be a polycyclic in which a plurality of monocyclics share a side. The heterocycle formed in such a case is a nitrogen-containing heterocycle having a -N=C-N- structure, and for example, a heterocycle with 6 to 20-membered ring, preferably 6 to 15-membered ring, more preferably 6 to 12-membered ring, further preferably 10 to 12-membered ring are used. The heterocycle may be a conjugated heterocycle. When $R^1$, $R^3$, $R^4$, and $R^5$ form a heterocycle, $R^2$ preferably represents a hydrogen atom. Examples of the heterocyclic structure include, to be specific, a triazabicyclo cyclic structure.

In the above-described general formula (1), $R^1$ to $R^5$ each preferably represent a hydrogen atom or a hydrocarbon group having 1 to 12 carbon atoms, more preferably a hydrogen atom or an alkyl group having 1 to 12 carbon atoms, further preferably a hydrogen atom or a chain alkyl group having 1 to 12 carbon atoms. Particularly preferably, in the above-described general formula (1), $R^1$, $R^2$, $R^4$, and $R^5$ each represent a chain alkyl group having 1 to 12 carbon atoms, and $R^3$ represents a hydrogen atom.

The first blocking agent represented by the above-described general formula (1) can be used alone or in combination of two or more.

Examples of the first blocking agent represented by the above-described general formula (1) include, to be specific, 3,3-dialkylguanidine, 1,1,3,3-tetraalkylguanidine, and 1,5,7-triazabicyclo[4.4.0]dec-5-ene.

The first blocking agent represented by the above-described general formula (1) preferably includes 1,1,3,3-tetraalkylguanidine, more preferably 1,1,3,3- tetramethylguanidine, and further preferably consists of 1,1,3,3- tetramethylguanidine.

When the first blocking agent contains 1,1,3,3-tetraalkylguanidine, low temperature curing properties of the water-dispersible blocked isocyanate can be reliably secured.

The first blocking agent has a dissociation temperature of, for example, 60°C or more, preferably 80°C or more, and for example, 150°C or less, preferably 130°C or less.

The dissociation temperature of the blocking agent can be measured by a method below (the same applies to the following).

The blocked isocyanate is applied onto a silicon wafer, and while heating, the temperature at which the isocyanate group regenerates is observed by IR measurement. When the blocking agent has high catalyst performance and the regenerated isocyanate group cannot be observed, the dissociation temperature of the blocking agent can be measured by mixing the blocked isocyanate with polyol, applying the mixture onto a silicon wafer, and observing the temperature at which the hydroxyl group of the polyol compound reacts by IR measurement while heating. The catalyst performance of the blocking agent will be described later.

The first blocking agent in the blocking agent has a content of, for example, 1 mol% or more, preferably more than 2 mol%, more preferably 4 mol% or more, further preferably 6 mol% or more, and for example, 100 mol% or less,

preferably 90 mol% or less, more preferably less than 80 mol%, further preferably 70 mol% or less, particularly preferably 25 mol% or less.

When the content of the first blocking agent is in the above-described range, water dispersibility of the water-dispersible blocked isocyanate can be stably secured, and storage stability of an aqueous dispersion of the water-dispersible blocked isocyanate can also be improved.

(2-2) Second blocking agent

The blocking agent contains a second blocking agent in addition to the above-described first blocking agent. The blocking agent more preferably consists of the first blocking agent and the second blocking agent. Therefore, the blocked isocyanate preferably contains a second latent isocyanate group in which the isocyanate group is blocked with the second blocking agent, in addition to the first latent isocyanate group.

When the blocking agent contains the second blocking agent, low temperature curing properties of the water-dispersible blocked isocyanate can be more reliably secured.

The second blocking agent is a blocking agent that inactivates the isocyanate group by blocking and that regenerates the isocyanate group under a state in which the isocyanate group is de-blocked. Furthermore, the second blocking agent is a blocking agent that does not have a catalytic activity to an extent that activates the regenerated isocyanate group, or has a lower catalytic activity than that of the above-described first blocking agent even though the second blocking agent has the catalytic activity to the extent that activates the regenerated isocyanate group.

The catalytic activity of the first blocking agent and the catalytic activity of the second blocking agent can be compared by the method described in paragraphs [0242] to [0247] of Japanese Unexamined Patent Publication No. 2017-82208.

Examples of the second blocking agent include an imidazole compound, alcohol compound, phenol compound, active methylene compound, amine compound, imine compound, oxime compound, carbamic acid compound, urea compound, acid amide compound, acid imide compound, triazole compound, pyrazole compound, mercaptan compound, bisulfite, imidazoline compound, and pyrimidine compound.

Examples of the imidazole compound include imidazole, benzimidazole, 2-methylimidazole, 4-methylimidazole, 2-ethylimidazole, 2-isopropylimidazole, 2,4-dimethylimidazole, 2-ethyl-4-methylimidazole, and 2-amine-imidazole.

Examples of the alcohol compound include methanol, ethanol, 2-propanol, n-butanol, s-butanol, 2-ethylhexyl alcohol, 1-octanol, 2-octanol, cyclohexyl alcohol, ethylene glycol, benzyl alcohol, 2,2,2-trifluoroethanol, 2,2,2-trichloroethanol, 2-(hydroxymethyl) furan, 2-methoxyethanol, methoxypropanol, 2-ethoxyethanol, n-propoxyethanol, 2-butoxyethanol, 2-ethoxyethoxyethanol, 2-ethoxybutoxyethanol, butoxyethoxyethanol, 2-butoxyethylethanol, 2-butoxyethoxyethanol, N,N-dibutyl-2-hydroxyacetamide, N-hydroxysuccinimide, N-morpholineethanol, 2,2-dimethyl-1,3-dioxolane-4-methanol, 3-oxazolidineethanol, 2-hydroxymethylpyridine, furfuryl alcohol, 12-hydroxystearic acid, triphenylsilanol, and methacrylic acid 2-hydroxyethyl.

Examples of the phenol compound include phenol, cresol, ethylphenol, n-propylphenol, isopropylphenol, n-butylphenol, s-butylphenol, t-butylphenol, n-hexylphenol, 2-ethylhexylphenol, n-octylphenol, n-nonylphenol, di-n-propylphenol, diisopropylphenol, isopropylcresol, di-n-butylphenol, di-s-butylphenol, di-t-butylphenol, di-n-octylphenol, di-2-ethylhexylphenol, di-n-nonylphenol, nitrophenol, bromophenol, chlorophenol, fluorophenol, dimethylphenol, styrenated phenol, methylsalicylate, methyl 4-hydroxybenzoate, benzyl 4-hydroxybenzoate, 2-ethylhexyl hydroxybenzoate, 4-[(dimethylamino)methyl]phenol, 4-[(dimethylamino)methyl]nonylphenol, bis(4-hydroxyphenyl)acetic acid, 2-hydroxypyridine, 2-hydroxyquinoline, 8-hydroxyquinoline, 2-chloro-3-pyridinol, and pyridine-2-thiol.

Examples of the active methylene compound include Meldrum's acid, malonate dialkyl, alkyl acetoacetate, 2-acetoacetoxyethylmethacrylate, acetylacetone, and cyanoethyl acetate. Examples of the malonate dialkyl include dimethyl malonate, diethyl malonate, di-n-butyl malonate, di-t-butyl malonate, di-2-ethylhexyl malonate, methyl n-butyl malonate, ethyl n-butyl malonate, methyl s-butyl malonate, ethyl s-butyl malonate, methyl t-butyl malonate, ethyl t-butyl malonate, diethyl methyl malonate, dibenzyl malonate, diphenyl malonate, benzylmethyl malonate, ethylphenyl malonate, t-butylphenyl malonate, and isopropylidene malonate. Examples of the alkyl acetoacetate include methyl acetoacetate, ethyl acetoacetate, n-propyl acetoacetate, isopropyl acetoacetate, n-butyl acetoacetate, t-butyl acetoacetate, benzyl acetoacetate, and phenyl acetoacetate.

Examples of the amine compound include dibutylamine, diphenylamine, aniline, N-methylaniline, carbazole, bis(2,2,6,6-tetramethylpiperidinyl) amine, di-n-propylamine, diisopropylamine, isopropylethylamine, 2,2,4-trimethylhexamethyleneamine, 2,2,5-trimethylhexamethyleneamine, N-isopropylcyclohexylamine, dicyclohexylamine, bis(3,5,5-trimethylcyclohexyl) amine, piperidine, 2,6-dimethylpiperidine, t-butylmethylamine, t-butylethylamine, t-butylpropylamine, t-butylbutylamine, t-butylbenzylamine, t-butylphenylamine, 2,2,6-trimethylpiperidine, 2,2,6,6-tetramethylpiperidine, (dimethylamino)-2,2,6,6-tetramethylpiperidine, 2,2,6,6-tetramethyl-4-piperidine, 6-methyl-2-piperidine, and 6-aminocaproic acid.

Examples of the imine compound include ethylene-imine, polyethylene-imine, and 1,4,5,6-tetrahydropyrimidine.

Examples of the oxime compound include formaldoxime, acetaldoxime, acetoxime, methylethylketoxime, cyclohexanoneoxime, diacetyl monoxime, benzophenone oxime, 2,2,6,6-tetramethylcyclohexanoneoxime, diisopropylketoneoxime, methyl t-butylketoneoxime, diisobutylketoneoxime, methylisobutylketoneoxime, methylisopropylketoneoxime, methyl 2,4-dimethylpentylketoneoxime, methyl 3-ethylheptylketoneoxime, methylisoamylketoneoxime, n-amylketoneoxime, 2,2,4,4-tetramethyl-1,3-cyclobutanedionemonoxime, 4,4'-dimethoxybenzophenoneoxime, and 2-heptanoneoxime.

Examples of the carbamic acid compound include phenyl N-phenyl carbamate.

Examples of the urea compound include urea, thiourea, and ethylene urea.

The acid amide compound is, in other words, a lactam compound. Examples of the acid amide compound include acetanilid, N-methylacetamide, acetic acid amide, ε-caprolactam, δ-valerolactam, γ-butyrolactam, pyrrolidone, 2,5-piperazinedione, and laurolactam.

Examples of the acid imide compound include succinimide, maleimide, and phthalimide.

Examples of the triazole compound include 1,2,4-triazole, and benzotriazole.

Examples of the pyrazole compound include pyrazole, 3-methylpyrazole, 3-methyl-5-phenylpyrazole, 3,5-diphenylpyrazole, 4-benzyl-3,5-dimethylpyrazole, 4-nitro-3,5-dimethylpyrazole, 4-bromo-3,5-dimethylpyrazole, and 3,5-dialkylpyrazole. 3,5-dialkylpyrazole does not have a substituent in the 4-position of the pyrazole ring. Examples of 3,5-dialkylpyrazole include 3,5-dimethylpyrazole, 3,5-diisopropylpyrazole, 3,5-di-t-butylpyrazole.

Examples of the mercaptan compound include butylmercaptan, dodecylmercaptan, and hexylmercaptan.

Examples of the bisulfite include sodium bisulfite.

Examples of the imidazoline compound include 2-methylimidazoline and 2-phenylimidazoline.

Examples of the pyrimidine compound include 2-methyl-1,4,5,6-tetrahydropyrimidine.

The second blocking agent is not limited to the above-described examples. For the second blocking agent, benzoxazolone, isatoic acid anhydride, and tetrabutylphosphonium acetate are also used.

These second blocking agents can be used alone or in combination of two or more.

The second blocking agent preferably contains a pyrazole compound, and more preferably consists of a pyrazole compound. For the pyrazole compound, preferably, 3,5-diphenylpyrazole and 3,5-dialkylpyrazole are used, more preferably, 3,5-dialkylpyrazole is used, further preferably, 3,5-dimethylpyrazole is used.

The second blocking agent has a dissociation temperature of, for example, 150°C or less, preferably 140°C or less, further preferably 130°C or less, and for example, 60°C or more.

The second blocking agent in the blocking agent has a content of, for example, 0 mol% or more, preferably 10 mol% or more, more preferably more than 20 mol%, further preferably 30 mol% or more, particularly preferably 75 mol% or more, and for example, 99 mol% or less, preferably less than 98 mol%, more preferably 96 mol% or less, further preferably 94 mol% or less.

(3) Preparation of blocked isocyanate

Next, a description is given below of preparation of blocked isocyanate.

To prepare blocked isocyanate, a blocking agent is allowed to react with a polyisocyanate compound.

When the blocked isocyanate contains only the first blocking agent, the polyisocyanate compound is allowed to react with the first blocking agent.

The equivalent ratio (active group/isocyanate group) of the active group that can react with the isocyanate group in the first blocking agent relative to the isocyanate group of the polyisocyanate compound is, for example, 1.0 or more, and for example, 1.5 or less, preferably 1.2 or less, more preferably 1.1 or less.

The reaction between the polyisocyanate compound and the first blocking agent is conducted, for example, under inert gas atmosphere. For the inert gas, for example, nitrogen gas and argon gas are used.

The reaction temperature is, for example, 0°C or more, preferably 20°C or more, and for example, 80°C or less, preferably 60°C or less. The reaction pressure is, for example, atmospheric pressure. The reaction time is, for example, 0.5 hours or more, preferably 1.0 hour or more, and for example, 24 hours or less, preferably 12 hours or less.

In this manner, the isocyanate group is allowed to react with the first blocking agent to produce the first latent isocyanate group.

When the blocking agent contains the first blocking agent and the second blocking agent, the above-described polyisocyanate compound is allowed to react with the above-described first blocking agent and the above-described second blocking agent.

The polyisocyanate compound, and the first blocking agent and second blocking agent are allowed to react in sequence without particular limitation, and for example, the polyisocyanate compound is allowed to react with the second blocking agent at a ratio at which a free isocyanate group remains, and thereafter the blocked isocyanate having the free isocyanate group is allowed to react with the first blocking agent.

The equivalent ratio (active group/isocyanate group) of the active group that can react with the isocyanate

group in the second blocking agent relative to the isocyanate group of the polyisocyanate compound is, for example, 0.1 or more, preferably more than 0.2, more preferably 0.3 or more, further preferably 0.75 or more, and for example, less than 0.99, preferably 0.98 or less, more preferably 0.94 or less.

In this manner, the second blocking agent blocks a portion of the isocyanate group of the polyisocyanate compound to produce the second latent isocyanate group, and the remaining portion of the isocyanate group of the polyisocyanate compound remains in free state.

Then, the blocked isocyanate in which the isocyanate group in free state remains is allowed to react with the first blocking agent.

The equivalent ratio (active group/isocyanate group) of the active group that can react with the isocyanate group in the first blocking agent relative to the free isocyanate group in the blocked isocyanate is, for example, 0.01 or more, preferably 0.05 or more, and for example, 1.3 or less, preferably 1.2 or less, more preferably 1.1 or less.

The reaction conditions for the polyisocyanate compound and the first blocking agent and second blocking agent are the same as the reaction conditions for the above-described reaction between the polyisocyanate compound and the first blocking agent.

Completion of the reaction can be determined by, for example, checking disappearance or decrease of the isocyanate group using infrared spectroscopic analysis.

In this manner, the isocyanate group remained in free state in the blocked isocyanate is allowed to react with the first blocking agent to produce the first latent isocyanate group.

The above-described reactions can be performed, for example, with no solvent or in the presence of an organic solvent.

Examples of the organic solvent include ketones, nitriles, aliphatic hydrocarbons, alicyclic hydrocarbons, aromatic hydrocarbons, glycol ether esters, ethers, halogenated aliphatic hydrocarbons, and polar aprotic solvents. The organic solvents can be used alone or in combination of two or more.

The blocked isocyanate is prepared in the above-described manner.

The blocked isocyanate has at least a first latent isocyanate group in which the isocyanate group is blocked with the first blocking agent. The blocked isocyanate preferably has both the first latent isocyanate group and the second latent isocyanate group in which the isocyanate group is blocked with the second blocking agent in one molecule.

The content of the first latent isocyanate group in the blocked isocyanate is in the range of the content of the first blocking agent in the above-described blocking agent.

The content of the second latent isocyanate group in the blocked isocyanate is in the range of the content of the second blocking agent in the above-described blocking agent.

The method for preparing the blocked isocyanate is not limited to the above-described method.

For example, the polyisocyanate compound is allowed to react with the first blocking agent at a ratio at which a free isocyanate group remains, and thereafter the blocked isocyanate having the free isocyanate may be allowed to react with the second blocking agent. The polyisocyanate compound can be allowed to react with the first blocking agent and second blocking agent simultaneously as well.

The polyisocyanate compound blocked only with the first blocking agent and the polyisocyanate compound blocked only with the second blocking agent can also be prepared separately and mixed. In this case, the blocked isocyanate contains the molecule having the first latent isocyanate group and the molecule having the second latent isocyanate group separately.

(3) Acid

In the water-dispersible blocked isocyanate, at least some of the first blocking agent that blocks the isocyanate group has been neutralized with acid. In this manner, the amino group of the first blocking agent forms an ammonium salt as a cationic group. When the blocking agent contains the second blocking agent, the acid may neutralize some of the second blocking agent.

For the acid, organic acid and inorganic acid are used.

The acid preferably includes an organic acid, and more preferably consists of an organic acid.

When the acid includes an organic acid, the low temperature curing properties and storage stability of the water-dispersible blocked isocyanate can be even more stably secured.

For the organic acid, carboxylic acid having 2 or 3 carbon atoms, and carboxylic acid having 4 or more carbon atoms are used, preferably carboxylic acid having 2 or 3 carbon atoms is used.

Examples of the carboxylic acid having 2 or 3 carbon atoms include acetic acid, propionic acid, and lactic acid. In other words, the acid further preferably consists of at least one kind of organic acid selected from the group consisting of acetic acid, propionic acid, and lactic acid.

The acids can be used alone or in combination of two or more.

To neutralize at least some of the first blocking agent with acid, for example, the above-described blocked

isocyanate is allowed to react with the above-described acid.

The equivalent ratio (acid/first blocking agent) of the acid relative to the first blocking agent that blocks the isocyanate group is, for example, 0.1 or more, preferably 0.5 or more, more preferably 0.8 or more, and for example, 5.0 or less, preferably 3.0 or less, more preferably 2.0 or less.

The reaction between the blocked isocyanate and the acid is conducted, for example, under atmosphere or inert gas atmosphere, without particular limitation. For the inert gas, nitrogen gas and argon gas are used.

The reaction temperature is, for example, 0°C or more, preferably 20°C or more, and for example, 80°C or less, preferably 60°C or less. The conditions of the reaction pressure are not particularly limited, and for example, pressurization conditions and atmospheric pressure conditions are used, preferably atmospheric pressure conditions are used. The reaction time is, for example, 0.1 hours or more, preferably 0.5 hours or more, and for example, 24 hours or less, preferably 12 hours or less.

The above-described reaction is conducted, preferably, in the presence of the above-described organic solvent.

Thus, the amino group of the first blocking agent that blocks the isocyanate group is neutralized with acid to form an ammonium salt as a cationic group.

In the above-described manner, the water-dispersible blocked isocyanate is produced.

When the organic solvent is used in the reaction between the blocked isocyanate and the acid, the water-dispersible blocked isocyanate is dissolved in a reaction solution containing the organic solvent.

In this case, water is added to the reaction solution containing the water-dispersible blocked isocyanate, and the reaction solution and water are emulsified using a mixer. Then, for example, the emulsified liquid is heated under reduced pressure to vaporize and remove the organic solvent.

In this manner, an aqueous dispersion of the water-dispersible blocked isocyanate is produced.

The aqueous dispersion of the water-dispersible blocked isocyanate has a solids concentration of, for example, 1 mass% or more, preferably 10 mass% or more, and for example, 80 mass% or less, preferably 50 mass% or less.

The aqueous dispersion of the water-dispersible blocked isocyanate has a viscosity of, for example, 1 mPa·s or more, preferably 3 mPa·s or more, and for example, 800 mPa·s or less, preferably 500 mPa·s or less. The viscosity of the aqueous dispersion can be measured in accordance with the method described in Example to be described later (the same applies to the following).

The aqueous dispersion of the water-dispersible blocked isocyanate has a pH of, for example, 3.0 or more, preferably 4.0 or more, and for example, 9.0 or less, preferably 8.0 or less. The pH of the aqueous dispersion can be measured in accordance with the method described in Example to be described later (the same applies to the following).

The aqueous dispersion of the water-dispersible blocked isocyanate has a particle size of, for example, 5 nm or more, preferably 10 nm or more, and for example, 500 nm or less, preferably 300 nm or less. The particle size of the aqueous dispersion can be measured in accordance with the method described in Example to be described later (the same applies to the following).

<Operations and effects>

In the water-dispersible blocked isocyanate described above, at least some of the first blocking agent represented by general formula (1) has been neutralized with acid. This allows the water-dispersible blocked isocyanate to be smoothly dispersed in water and to maintain the water dispersed state for a long time. Further, in the water-dispersible blocked isocyanate, at least some of the first blocking agent is dissociated from the isocyanate group at relatively low temperature, to be specific, 120°C or less.

Therefore, the water-dispersible blocked isocyanate is excellent in low temperature curing properties and storage stability.

Further, when at least some of the first blocking agent represented by the above-described general formula (1) is neutralized with acid, the water-dispersible blocked isocyanate contains a tertiary ammonium cationic salt produced by the neutralization. Therefore, the water-dispersible blocked isocyanate can exhibit excellent antibacterial activity derived from the tertiary ammonium cationic salt.

<Resin material>

The resin material contains the above-described water-dispersible blocked isocyanate, and as necessary, contains a polyol compound. For the resin material, a two-component polyurethane resin material, a one-component polyurethane resin material, and a blocked isocyanate-binder resin composition are used.

The two-component polyurethane resin material is obtained by separately preparing a curing agent containing the above-described water-dispersible blocked isocyanate and a main component containing the polyol compound, and blending them immediately before use.

The one-component polyurethane resin material is obtained by mixing the curing agent containing the above-described water-dispersible blocked isocyanate and the main component containing the polyol compound in advance.

The blocked isocyanate-binder resin composition is obtained by mixing the above-described water-dispersible blocked isocyanate and a binder resin liquid containing a binder resin in advance. The binder resin liquid does not contain a polyol compound.

For the polyol compound, low molecular weight polyol and high molecular weight polyol are used.

The low molecular weight polyol has a number average molecular weight of, for example, less than 300, preferably less than 400. The low molecular weight polyol has two or more hydroxyl groups.

Examples of the low molecular weight polyol include dihydric alcohol, trihydric alcohol, tetrahydric alcohol, pentahydric alcohol, hexahydric alcohol, heptahydric alcohol, and octahydric alcohol.

Examples of the dihydric alcohol include ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethyl pentanediol, 3,3-dimethylolheptane, alkane (C7 to 20) diol, 1,3-cyclohexanedimethanol, 1,4-cyclohexanedimethanol, 1,3-cyclohexanediol, 1,4-cyclohexanediol, hydrogenated bisphenol A, 1,4-dihydroxy-2-butene, 2,6-dimethyl-1-octene-3,8-diol, bisphenol A, diethylene glycol, triethylene glycol, and dipropylene glycol.

Examples of the trihydric alcohol include glycerine, trimethylolpropane, and triisopropanolamine.

Examples of the tetrahydric alcohol include tetramethylolmethane (pentaerythritol), and diglycerol.

Examples of the pentahydric alcohol include xylitol.

Examples of the hexahydric alcohol include sorbitol, mannitol, allitol, iditol, dulcitol, altritol, inositol, and dipentaerythritol.

Examples of the heptahydric alcohol include perseitol.

Examples of the octahydric alcohol include sucrose.

These low molecular weight polyols can be used alone or in combination of two or more.

The high molecular weight polyol has a number average molecular weight of, for example, 300 or more, preferably 400 or more, more preferably 500 or more. The high molecular weight polyol has two or more hydroxyl groups.

Examples of the high molecular weight polyol include polyether polyol, polyester polyol, polycarbonate polyol, polyurethane polyol, epoxy polyol, vegetable oil polyol, polyolefin polyol, acrylic polyol, vinyl monomer modified polyol, and fluorine-containing polyol.

Examples of the polyether polyol include polyoxyalkylene (C2 to 3) polyol, and polytetramethylene ether polyol.

Examples of the polyester polyol include adipic acid-based polyester polyol, phthalic acid-based polyester polyol, and lactone-based polyester polyol.

Examples of the polycarbonate polyol include a ring-opening polymerization product of ethylene carbonate using the above-described low molecular weight polyols as an initiator, and amorphous polycarbonate polyols obtained by copolymerizing the above-described dihydric alcohol and a ring-opening polymerization product.

Examples of the polyurethane polyol include polyester polyurethane polyol, polyether polyurethane polyol, polycarbonate polyurethane polyol, and polyester polyether polyurethane polyol.

Examples of the epoxy polyol include epoxy polyol obtained by reaction between the above-described low molecular weight polyol and polyfunctional halohydrin.

Examples of the vegetable oil polyol include castor oil, coconut oil, and ester-modified castor oil polyol.

Examples of the polyolefin polyol include polybutadiene polyol and partially saponified ethylene-vinyl acetate copolymer.

Examples of the acrylic polyol include a copolymer of hydroxyl group-containing acrylate and a copolymerizable vinyl monomer that is copolymerizable with the hydroxyl group-containing acrylate.

The vinyl monomer modified polyol is obtained by reaction between the above-described high molecular weight polyol and a vinyl monomer.

Examples of the fluorine-containing polyol include acrylic polyol in which in copolymerization of the above-described acrylic polyol, as the copolymerizable vinyl monomer, a fluorine compound is blended.

These high molecular weight polyols can be used alone or in combination of two or more.

These polyol compounds can be used alone or in combination of two or more.

Of the polyol compounds, preferably, high molecular weight polyol is used, more preferably, polyurethane polyol and acrylic polyol are used.

For the binder resin, other than the above-described polyol compounds, for example, a polymer compound not having a hydroxyl group is used, preferably, a urethane resin and an acrylic resin are used.

As necessary, an additive can be appropriately blended with any or all of the water-dispersible blocked isocyanate, the polyol compound, and the binder resin. Examples of the additive include a reaction solvent, a catalyst, an epoxy resin, a coating improver, a leveling agent, an antifoaming agent, an antioxidant, an ultraviolet absorber, a thickening agent, an antisettling agent, a plasticizer, a surfactant, a pigment, a filler, organic fine particles, inorganic fine particles, and an anti-fungal agent. The amount of the additive blended is appropriately determined according to its purpose and use.

In the blending of the water-dispersible blocked isocyanate and the polyol compound, the equivalent ratio (latent isocyanate group/hydroxyl group) of the latent isocyanate group of the water-dispersible blocked isocyanate relative to the hydroxyl group of the polyol compound is, for example, 0.1 or more, preferably 0.5 or more, and for example, 5 or less, preferably 3 or less.
A treating agent, containing any of the water-dispersible blocked isocyanate, the polyol compound, and the binder resin, or a mixture of these, is applied to an object by a known coating method, and then dried to thereby form a coating film. Thereafter, the coating film is heated, and aged as required.
The heating temperature is, for example, 60°C or more, preferably 80°C or more, and for example, 180°C or less, preferably 150°C or less, more preferably 130°C or less, further preferably 120°C or less, particularly preferably 110°C or less.
When the heating temperature is high, the curing time can be shortened for curing of the low temperature curing properties of the present invention.
Examples of the use of these resin materials include a fiber-treating agent, a water repellent, a coating composition, an adhesive, an antistatic agent, a treating agent for papermaking, a wet paper strength enhancer, a receiving layer for recording medium, an electrodeposition coating composition, an antibacterial and antiviral composition, an encapsulated composition, an optical member, and a latex composition.
Of these uses of the resin materials, preferably, a fiber-treating agent, a water repellent, a coating composition, and an adhesive are used, more preferably, a fiber-treating agent and a water repellent are used.

<Fiber-treating agent>

The fiber-treating agent is used for textile printing in which a cloth-like fiber product is printed with an ink to form an image. Examples of the textile printing include analog textile printing and digital textile printing. Examples of the analog textile printing include screen textile printing. Examples of the digital textile printing include ink-jet textile printing.
When a cloth-like fiber product is printed with an ink without using the fiber-treating agent, the resulting printed product may not have satisfactory rubbing fastness.
The cloth-like fiber product is made of fibers. Examples of the form of the cloth-like fiber product include woven fabrics, knitted fabrics, nonwoven fabrics, and raised cloths. The cloth-like fiber product may have a portion other than fibers.
Examples of the fiber of the cloth-like fiber product include natural fiber, regenerated fiber, synthetic fiber, semi-synthetic fiber, and inorganic fiber.
Examples of the natural fiber include cotton, kapok, flax, ramie, jute, Manila hemp, sisal hemp, cashmere, mohair, alpaca, camel hair, silk, wool, and down feather.
Examples of the regenerated fiber include rayon, polynosic, cupra, and Tencel.
Examples of the synthetic fiber include polyamide fiber, polyester fiber, acrylic fiber, polyolefin fiber, polyvinyl alcohol fiber, polyvinyl chloride fiber, polyurethane fiber, polyoxymethylene fiber, polytetrafluoroethylene fiber, benzoate fiber, polyparaphenylene benzbisthiazole fiber, polyparaphenylene benzbisoxazole fiber, polyimide fiber, and lactic acid fiber.
Examples of the semi-synthetic fiber include acetate and promix.
Examples of the inorganic fiber include asbestos, glass fiber, carbon fiber, alumina fiber, silicon carbide fiber, boron fiber, Tyranno fiber, inorganic whisker, rock fiber, and slag fiber glass fiber.
The fibers can be used alone or in combination of two or more kinds.
For the cloth-like fiber product, to be specific, clothes, belongings, and other products are used. Examples of the clothes include, shirts, sweat shirts, jerseys, pants, one-piece dresses, blouses, hats, and socks. Examples of the belongings include handkerchiefs, neckties, and fabric belts. Examples of the other products include shoes, bedclothes, sheets, curtains, car seats, bags, and flags.
The color of the cloth-like fiber product is not particularly limited. The cloth-like fiber product may be white or colored other than white.
Such a cloth-like fiber product has an anionic surface.
The ink contains, for example, an anionic resin, a pigment, and water.
Examples of the anionic resin include a resin having an anionic group, and a resin subjected to surface treatment with an anionic dispersant.
Examples of the resin include urethane resin, (meth)acrylic resin, olefin resin, vinyl resin, and cellulose resin. The term "(meth)acrylic" includes "methacrylic" and "acrylic" (the same applies to the following).
Examples of the anionic group include carboxy group and sulfo group. The anionic group is positioned in a main chain or a side chain of the resin.
Examples of the anionic dispersant include anionic surfactants.
The anionic resins can be used alone or in combination of two or more.

Examples of the pigment include known organic pigments and known inorganic pigments.

The ink may, as necessary, contain the above-described low molecular weight polyol.

The fiber-treating agent is applied to the cloth-like fiber product for pretreatment and/or post-treatment for printing the cloth-like fiber product with an ink in the textile printing. The fiber-treating agent can impart excellent rubbing fastness to the resulting printed product.

The fiber-treating agent contains at least the above-described water-dispersible blocked isocyanate. Therefore, the fiber-treating agent is excellent in low temperature curing properties and storage stability. Preferably, the fiber-treating agent further contains the above-described high molecular weight polyol.

The fiber-treating agent may further contain a nonionic resin and/or a cationic resin.

Examples of the nonionic resin include a resin having a nonionic group, and a resin subjected to surface treatment with a nonionic dispersant.

Examples of the resin of the nonionic resin include the above-described resins.

Examples of the nonionic group include at least three consecutive oxyethylene groups (polyoxyethylene groups). The nonionic group is positioned in a main chain or a side chain of the resin.

Examples of the nonionic dispersant include polyoxyethylene alkyl phenyl ether and polyoxyethylene alkyl ether. The nonionic dispersants can be used alone or in combination of two or more.

Examples of the cationic resin include a resin having a cationic group, and a resin subjected to surface treatment with a cationic dispersant.

Examples of the resin of the cationic resin include the above-described resins.

Examples of the cationic group include amino group, pyridine group, imidazole group, benzimidazole group, triazole group, benzotriazole group, pyrazole group, and benzopyrazole group. The cationic group is positioned in a main chain or a side chain of the resin.

Examples of the cationic dispersant include amino group-containing acrylic polymer, polyethyleneimine, cationic polyvinyl alcohol resin, and cationic water-soluble multi-branched polyester amide resin. The cationic dispersants can be used alone or in combination of two or more.

The cationic resins can be used alone or in combination of two or more.

Such a fiber-treating agent is, for example, a polyurethane resin, a polyester resin, and an acrylic resin, and is preferably, a polyurethane resin material.

When the fiber-treating agent is a polyurethane resin material, the fiber-treating agent is, for example, a mixed dispersion in which the aqueous dispersion of the water-dispersible blocked isocyanate as a curing agent and an aqueous dispersion of the high molecular weight polyol as a main component are mixed in advance at the above-described ratio.

To be more specific, when the fiber-treating agent is used in the pretreatment for printing, first, the water-dispersible blocked isocyanate and the high molecular weight polyol are mixed so that the equivalent ratio of the latent isocyanate group relative to the hydroxyl group is in the above-described range, and thus, a pretreatment liquid is prepared as an example of the fiber-treating agent.

As necessary, water and/or alcohol is/are added to the pretreatment liquid to adjust a solids concentration of the pretreatment liquid. The solids concentration of the pretreatment liquid is, for example, 1 mass% or more, and for example, 20 mass% or less, preferably 10 mass% or less.

Then, the pretreatment liquid is applied to the above-described cloth-like fiber product. For a method for applying the pretreatment liquid, padding, dipping, spraying, coating, and printing methods are used, preferably, a dipping method is used. To be specific, the cloth-like fiber product is immersed in the pretreatment liquid. Thereafter, the cloth-like fiber product is withdrawn from the pretreatment liquid and is dried as required.

Thus, a coating film of the pretreatment liquid is formed on the surface of the cloth-like fiber product. Subsequently, the coating film of the pretreatment liquid is heated to the above-described heating temperature.

At this time, the above-described first blocking agent dissociates from the above-described polyisocyanate compound. This allows the polyisocyanate compound to react with the high molecular weight polyol to form a polyurethane resin. Thus, the coating film of the pretreatment liquid is cured.

The cured coating film of the pretreatment liquid contains the first blocking agent in a de-blocked state, the first blocking agent of which at least some are neutralized with acid to form an ammonium salt. Therefore, the cured coating film of the pretreatment liquid is cationic. The cationic, cured coating film of the pretreatment liquid forms an ionic bond with the surface of the anionic cloth-like fiber product. As a result of this, the cured coating film of the pretreatment liquid can be stably fixed onto the surface of the cloth-like fiber product.

Then, the above-described ink is printed on the cured coating film of the pretreatment liquid to form an ink layer. The ink layer is dried as required. The ink layer contains an anionic resin. For this reason, the ink layer is anionic. This anionic ink layer forms an ionic bond with the cationic, cured coating film of the pretreatment liquid. Therefore, the ink layer can be stably fixed onto the cured coating film of the pretreatment liquid.

When the fiber-treating agent is used in the post-treatment for printing, a post-treatment liquid as an example of the fiber-treating agent is prepared in the same manner as the pretreatment liquid. Then, a coating of the post-treatment

liquid is applied so as to cover the ink layer. Subsequently, the coating film of the post-treatment liquid is heated to the above-described heating temperature, thereby being cured. The cured coating film of the post-treatment liquid is cationic, which is the same as the cured coating film of the pretreatment liquid. The cationic, cured coating film of the post-treatment liquid forms an ionic bond with the anionic ink layer. Therefore, the cured coating film of the post-treatment liquid can be stably fixed onto the ink layer.

In the above-described manner, a printed product having an image formed on the cloth-like fiber product is prepared.

The printed product sequentially includes the anionic cloth-like fiber product, the cationic, cured coating film of the pretreatment liquid, the anionic ink layer, and as necessary, the cationic, cured coating film of the post-treatment liquid in the thickness direction of the cloth-like fiber product.

In such a printed product, the cloth-like fiber product and the cured coating film of the pretreatment liquid form an ionic bond, and the cured coating film of the pretreatment liquid and the ink layer form an ionic bond. As necessary, the ink layer and the cured coating film of the post-treatment liquid form an ionic bond. Therefore, excellent rubbing fastness can be imparted to the printed product.

<Water repellent>

The water repellent imparts water repellency for preventing adhesion of water to, for example, the above-described cloth-like fiber product.

The cloth-like fiber product is usually washed and used repeatedly. For this reason, there is desired washing durability capable of maintaining excellent water repellency even though the cloth-like fiber product that has been treated with the water repellent is washed a plurality of times.

The water repellent contains at least the above-described water-dispersible blocked isocyanate. Therefore, the water repellent is excellent in low temperature curing properties and storage stability. Preferably, the water repellent further contains a fluorine resin.

The fluorine resin is a polymer of a (meth)acrylate monomer containing fluorine. Examples of the (meth)acrylate monomer containing fluorine include (meth)acrylates having 3 to 6 carbon atoms including a perfluoroalkyl group.

The fluorine resin may be a copolymer of a (meth)acrylate monomer containing fluorine and other monomers.

Examples of other monomers include (meth)acrylic esters, (meth)acrylamides, maleic acid alkyl esters, olefins, vinyl carboxylates, styrenes, and vinyl ethers.

Examples of the (meth)acrylic esters include lauryl (meth)acrylate, stearyl (meth)acrylate, benzyl (meth)acrylate, glycidyl (meth)acrylate, aziridinyl (meth)acrylate, hydroxyalkyl (meth)acrylate, 3-chloro-2-hydroxypropyl methacrylate, and alkylenediol acrylate.

Examples of the (meth)acrylamides include (meth)acrylamide, N-methylol (meth)acrylamide, diacetone (meth)acrylamide, and methylolated diacetone acrylamide.

Examples of the maleic acid alkyl esters include dibutyl maleate.

Examples of the olefins include ethylene, propylene, butadiene, isoprene, vinyl chloride, vinyl fluoride, vinylidene chloride, vinylidene fluoride, and chloroprene.

Examples of the vinyl carboxylates include vinyl acetate.

Examples of the styrenes include styrene, $\alpha$-methylstyrene, and $\beta$-methylstyrene.

Examples of the vinyl ethers include ethyl vinyl ether, cyclohexyl vinyl ether, and halogenated alkyl vinyl ether.

Other monomers can be used alone or in combination of two or more kinds.

The polymerization ratio of the (meth)acrylate monomer containing fluorine relative to the total monomers used in the copolymerization is, for example, 40 mass% or more, preferably 50 mass% or more, and for example, 100 mass% or less, preferably 80 mass% or less.

The content of such a fluorine resin relative to 100 mass% of the total mass of the fluorine resin and the water-dispersible blocked isocyanate is, for example, 50 mass% or more, preferably 70 mass% or more, more preferably 80 mass% or more, and for example, 95 mass% or less.

The water repellent may further contain a nonionic compound and/or a cationic compound.

For the nonionic compound, for example, an ether-type nonionic compound, an ester-type nonionic compound, and an alkanol amide-type nonionic compound are used.

Examples of the ether-type nonionic compound include a compound in which ethylene oxide is added to an alcohol having 10 to 18 carbon atoms, a compound in which ethylene oxide is added to alkylphenol, a compound in which ethylene oxide is added to polypropylene alcohol, and a compound in which ethylene oxide is added to a fatty acid ester of a polyhydric alcohol.

Examples of the ester-type nonionic compound include glycerol fatty acid ester and sorbitan fatty acid ester.

Examples of the alkanol amide-type nonionic compound include a reaction product of fatty acid and diethanol amine.

The nonionic compounds can be used alone or in combination of two or more.
For the cationic compound, for example, a quaternary ammonium salt and an alkyl amine salt are used.
The cationic compounds can be used alone or in combination of two or more.
Such a water repellent is, for example, a blocked isocyanate-binder resin composition.
When the water repellent is a blocked isocyanate-binder resin composition, the water repellent is, for example, a liquid mixture in which the aqueous dispersion of the water-dispersible blocked isocyanate and the fluorine resin as a binder resin are mixed at the above-described ratio.
The solids concentration of the water repellent is adjusted by adding water to the water repellent. The solids concentration of the water repellent is, for example, 0.5 mass% or more, and for example, 10 mass% or less, preferably 5 mass% or less.
When the cloth-like fiber product is treated with the water repellent, the water repellent is applied to the above-described cloth-like fiber product. For a method for applying the water repellent, the same method as for the pretreatment liquid is used, preferably, a dipping method is used. To be specific, the cloth-like fiber product is immersed in the water repellent, and thereafter, the cloth-like fiber product is withdrawn from the water repellent and dried as required.
Thus, a coating film of the water repellent is formed on the surface of the cloth-like fiber product. Subsequently, the coating film of the water repellent is heated to the above-described heating temperature. At this time, the above-described first blocking agent dissociates from the above-described polyisocyanate compound.
For this reason, the coating film of the water repellent contains the first blocking agent in a de-blocked state, the first blocking agent of which at least some are neutralized with acid to form an ammonium salt. Thus, the coating film of the water repellent is cationic. The cationic coating film of the water repellent forms an ionic bond with the surface of the anionic cloth-like fiber product.
As a result of this, the coating film of the water repellent can be stably fixed onto the surface of the cloth-like fiber product, which can impart excellent washing durability to the cloth-like fiber product that has been treated with the water repellent.

<Coating composition>

The coating composition contains at least the above-described water-dispersible blocked isocyanate. Therefore, the coating composition is excellent in low temperature curing properties and storage stability. Preferably, the coating composition further contains the above-described high molecular weight polyol.
Such a coating composition is, for example, a polyurethane resin, a polyester resin, and an acrylic resin, and is preferably, a polyurethane resin material.
When the coating composition is a polyurethane resin material, the coating composition is, for example, a mixed dispersion in which the aqueous dispersion of the water-dispersible blocked isocyanate as a curing agent and an aqueous dispersion of the high molecular weight polyol as a main component are mixed in advance at the above-described ratio.
As necessary, water is added to the coating composition to adjust a solids concentration of the coating composition. The solids concentration of the coating composition is, for example, 1 mass% or more, and for example, 40 mass% or less, preferably 30 mass% or less.
The coating composition is applied to an object to be coated by a known coating method.
Examples of the coating method include spray coating, dip coating, spin coating, rotary atomizing coating, and curtain coating.
For the object to be coated, for example, inorganic matter and organic matter are used. Examples of the inorganic matter include concrete, natural stone, glass, and metal. Examples of the organic matter include plastic, rubber, adhesive, and wood material.
Subsequently, the coating film of the coating composition is heated to the above-described heating temperature.
At this time, the above-described first blocking agent dissociates from the above-described polyisocyanate compound. This allows the polyisocyanate compound to react with the high molecular weight polyol to form a polyurethane resin. Thus, the coating film of the coating composition is cured.
The cured coating film of the coating composition has excellent adhesion property to the object to be coated.

<Adhesive>

The adhesive contains at least the above-described water-dispersible blocked isocyanate. Therefore, the adhesive is excellent in low temperature curing properties and storage stability. Preferably, the adhesive further contains the above-described high molecular weight polyol.
Such an adhesive is, for example, a polyurethane resin, a polyester resin, and an acrylic resin, and is preferably, a polyurethane resin material.
When the adhesive is a polyurethane resin material, the adhesive is, for example, a mixed dispersion in which

the aqueous dispersion of the water-dispersible blocked isocyanate as a curing agent and an aqueous dispersion of the high molecular weight polyol as a main component are mixed in advance at the above-described ratio.

As necessary, water is added to the adhesive to adjust a solids concentration of the adhesive. The solids concentration of the adhesive is, for example, in the range of the solids concentration of the coating composition.

A coating of the adhesive is applied to a predetermined position where an adherend is adhered by the above-described coating method.

For the adherend, for example, a packaging material and a civil engineering material are used. Examples of the packaging material include a plastic film, a metal foil, and a metal deposited film. Examples of the civil engineering material include FRP and steel.

Subsequently, the adhesive is heated to the above-described heating temperature while the adherend is brought into contact with the adhesive. Thus, the adhesive is cured. The cured product of the adhesive has excellent adhesion property to the adherend.

<Other uses>

The above-described water-dispersible blocked isocyanate can be suitably used in various industrial fields, in addition to the fiber-treating agent, the water repellent, the coating composition, and the adhesive. In particular, since the above-described water-dispersible blocked isocyanate can exhibit excellent antibacterial activity derived from the tertiary ammonium cationic salt, it can be suitably used as an antimicrobial agent.

Examples

Hereinafter, the present invention will be described more in detail with reference to examples, but not limited to the examples. The specific numerical values in blending ratio (content), property value, and parameter used in the following description can be replaced with upper limit values (numerical values defined as "or less" or "below") or lower limit values (numerical values defined as "or more" or "above") of corresponding numerical values in blending ratio (content), property value, and parameter described in the above-described "DESCRIPTION OF THE EMBODIMENTS". The "parts" and "%" are based on mass unless otherwise specified.

<Preparation of water-dispersible blocked isocyanate>

Examples 1 to 11

At room temperature (25°C), in a 2 L-reactor equipped with a mixer, a thermometer, a condenser, and a nitrogen gas inlet tube, 200 parts by mass of an isocyanurate derivative of hexamethylene diisocyanate (HDI) (polyisocyanate compound, trade name: TAKENATE (registered trademark) D-170N, solid content: 100 mass%, isocyanate group content: 20.7%, manufactured by Mitsui Chemicals, Inc.) and ethyl acetate (solvent) were charged.

Then, 3,5-dimethylpyrazole (DMP, second blocking agent) was added to the reactor. The amount of DMP added was the number of moles of DMP shown in Table 1 relative to 100 mol of the isocyanate group of the isocyanurate derivative of HDI. The isocyanurate derivative of HDI was then allowed to react with DMP.

Then, 1,1,3,3-tetramethylguanidine (TMG, first blocking agent) was added to the reactor. The amount of TMG added was the number of moles of TMG shown in Table 1 relative to 100 mol of the isocyanate group of the isocyanurate derivative of HDI. The isocyanurate derivative of HDI was then allowed to react with TMG.

Thereafter, FT-IR spectrum was measured to confirm that the isocyanate group was blocked. Thus, a reaction solution containing a blocked isocyanate was obtained.

Then, acetic acid was added to the reaction solution and stirred. The amount of acetic acid added was the number of moles of acetic acid shown in Table 1 relative to 1 mol of the first blocking agent (TMG) used. At this time, the temperature of the reaction solution was 28°C. The stirring time was 0.5 hours.

Thus, the amino group of the first blocking agent was neutralized with acetic acid to form an ammonium acetate salt as a cationic group. In this manner, a reaction solution containing a water-dispersible blocked isocyanate was obtained.

Thereafter, 220 parts by mass of water was added to 120 parts by mass of the reaction solution containing the water-dispersible blocked isocyanate. Subsequently, the reaction solution and water were stirred and emulsified by a homomixer.

Then, under reduced pressure, ethyl acetate (solvent) was distilled off from the emulsion and a portion of the water was also distilled off.

In the above-described manner, an aqueous dispersion of the water-dispersible blocked isocyanate was prepared. The aqueous dispersion of the water-dispersible blocked isocyanate had a solids concentration of 30 mass%.

Example 12

In the same manner as in Example 1, an aqueous dispersion of the water-dispersible blocked isocyanate was prepared.

In Example 12, as shown in Table 2, the second blocking agent was not used. As the blocking agent, only TMG was added to the isocyanurate derivative of hexamethylene diisocyanate (HDI). The amount of TMG added was 100 mol relative to 100 mol of the isocyanate group of the isocyanurate derivative of HDI.

Example 13

In the same manner as in Example 5, an aqueous dispersion of the water-dispersible blocked isocyanate was prepared.

In Example 13, as shown in Table 2, propionic acid was used instead of acetic acid.

Example 14

In the same manner as in Example 5, an aqueous dispersion of the water-dispersible blocked isocyanate was prepared.

In Example 14, as shown in Table 2, lactic acid was used instead of acetic acid.

Examples 15 to 17

At room temperature (25°C), in a 2 L-reactor equipped with a mixer, a thermometer, a condenser, and a nitrogen gas inlet tube, 600 parts by mass of an isocyanurate derivative of hexamethylene diisocyanate (HDI) (polyisocyanate compound, trade name: TAKENATE (registered trademark) D-170N, solid content: 100 mass%, isocyanate group content: 20.7%, manufactured by Mitsui Chemicals, Inc.) and ethyl acetate (solvent) were charged.

Then, poly(oxyethylene) methyl ether (methoxy polyethylene glycol, methoxy PEG 1000, hydrophilic compound) was added to the reactor. The amount of poly(oxyethylene) methyl ether added was the number of moles of methoxy PEG1000 shown in Table 2 relative to 100 mol of the isocyanate group of the isocyanurate derivative of HDI. The isocyanurate derivative of HDI was then allowed to react with poly(oxyethylene) methyl ether.

Thus, a reaction solution containing an oxyethylene group-containing blocked isocyanate was obtained.

Then, DMP (second blocking agent) was added to the reaction solution containing the oxyethylene group-containing blocked isocyanate. The amount of DMP added was the number of moles of DMP shown in Table 2 relative to 100 mol of the isocyanate group of the isocyanurate derivative of HDI. The isocyanurate derivative of HDI was then allowed to react with DMP.

Then, TMG (first blocking agent) was added to the reaction solution. The amount of TMG added was the number of moles of TMG shown in Table 2 relative to 100 mol of the isocyanate group of the isocyanurate derivative of HDI. The isocyanurate derivative of HDI was then allowed to react with TMG.

Thereafter, FT-IR spectrum was measured to confirm that the isocyanate group was blocked. Thus, a reaction solution containing a blocked isocyanate was obtained.

Then, acetic acid was added to the reaction solution and stirred. The amount of acetic acid added was 2 mol relative to 1 mol of the first blocking agent (TMG) used. At this time, the temperature of the reaction solution was 34°C. The stirring time was 0.5 hours.

Thus, the amino group of the first blocking agent was neutralized with acetic acid to form an ammonium acetate salt. In this manner, a reaction solution containing a water-dispersible blocked isocyanate was obtained.

Thereafter, 220 parts by mass of water was added to 120 parts by mass of the reaction solution containing the water-dispersible blocked isocyanate. Subsequently, the reaction solution and water were stirred and emulsified by a homomixer.

Then, under reduced pressure, ethyl acetate (solvent) was distilled off from the emulsion and a portion of the water was also distilled off.

In the above-described manner, an aqueous dispersion (polyisocyanate component) of the water-dispersible blocked isocyanate was prepared. This aqueous dispersion had a solids concentration of 30 mass%.

Example 18

In the same manner as in Example 5, an aqueous dispersion of the water-dispersible blocked isocyanate was prepared.

In Example 18, as shown in Table 2, 1,5,7-triazabicyclo[4.4.0]dec-5-ene (TABD) was used instead of TMG as

the first blocking agent.

Examples 19 to 30

In the same manner as in Example 2, an aqueous dispersion of the water-dispersible blocked isocyanate was prepared.

As shown in Tables 4 to 5, the following polyisocyanate derivatives were used as the polyisocyanate compound. Trade names, types of isocyanate, and modified forms are listed in the tables.

Trimethylolpropane (TMP) adduct of HDI (triol adduct) (polyisocyanate compound, trade name: TAKENATE (registered trademark) D-160N, solid content: 75 mass%, isocyanate group content: 12.6%, manufactured by Mitsui Chemicals, Inc.)

Biuret of HDI (polyisocyanate compound, trade name: TAKENATE (registered trademark) D-165N, solid content: 100 mass%, isocyanate group content: 23.3%, manufactured by Mitsui Chemicals, Inc.)

Allophanate of HDI (polyisocyanate compound, trade name: TAKENATE (registered trademark) D-178NL, solid content: 100 mass%, isocyanate group content: 19.2%, manufactured by Mitsui Chemicals, Inc.)

TMP adduct of 1,3-bis(isocyanatomethyl)cyclohexane (1,3-$H_6$XDI) (polyisocyanate compound, trade name: TAKENATE (registered trademark) D-120N, solid content: 75 mass%, isocyanate group content: 11.0%, manufactured by Mitsui Chemicals, Inc.)

Isocyanurate of 1,3-$H_6$XDI (polyisocyanate compound, trade name: TAKENATE (registered trademark) D-127N, solid content: 75 mass%, isocyanate group content: 13.5%, manufactured by Mitsui Chemicals, Inc.)

TMP adduct of xylylene diisocyanate (XDI) (polyisocyanate compound, trade name: TAKENATE (registered trademark) D-110N, solid content: 75 mass%, isocyanate group content: 11.5%, manufactured by Mitsui Chemicals, Inc.)

Isocyanurate of XDI (polyisocyanate compound, trade name: TAKENATE (registered trademark) D-131N, solid content: 75 mass%, isocyanate group content: 13.7%, manufactured by Mitsui Chemicals, Inc.)

TMP adduct of tolylene diisocyanate (TDI) (polyisocyanate compound, trade name: TAKENATE (registered trademark) D-103H, solid content: 75 mass%, isocyanate group content: 13.0%, manufactured by Mitsui Chemicals, Inc.)

Isocyanurate of TDI (polyisocyanate compound, trade name: TAKENATE (registered trademark) D-204, solid content: 50 mass%, isocyanate group content: 7.5%, manufactured by Mitsui Chemicals, Inc.)

Isocyanurate of PDI (polyisocyanate compound, trade name: STABiO (registered trademark) D-370N, solid content: 100 mass%, isocyanate group content: 25%, manufactured by Mitsui Chemicals, Inc.)

Comparative Example 1

In the same manner as in Example 5, an aqueous dispersion of the water-dispersible blocked isocyanate was prepared.

In Comparative Example 1, as shown in Table 3, dimethylaminoethanol (DMAE) was used instead of TMG as the first blocking agent.

Comparative Example 2

In the same manner as in Example 5, an aqueous dispersion of the water-dispersible blocked isocyanate was prepared.

In Comparative Example 2, as shown in Table 3, N-methyl piperazine (MPZ) was used instead of TMG as the first blocking agent.

Comparative Example 3

In the same manner as in Example 5, an aqueous dispersion of the water-dispersible blocked isocyanate was prepared.

In Comparative Example 3, as shown in Table 3, N-methylhomopiperazine (MHPZ) was used instead of TMG as the first blocking agent.

Comparative Example 4

In the same manner as in Example 5, a water-dispersible blocked isocyanate was prepared. The water-dispersible blocked isocyanate was not dispersed in water.

In Comparative Example 4, as shown in Table 3, 1,8-diazabicyclo[5.4.0]-7-undecene (DBU) was used instead of TMG as the first blocking agent.

Comparative Example 5

In the same manner as in Example 5, an aqueous dispersion of the water-dispersible blocked isocyanate was prepared.

In Comparative Example 5, as shown in Table 3, N,N,N'-trimethylethylenediamine (TMEDA) was used instead of TMG as the first blocking agent.

Comparative Example 6

In the same manner as in Example 5, a water-dispersible blocked isocyanate was prepared. The water-dispersible blocked isocyanate was not dispersed in water.

In Comparative Example 6, as shown in Table 3, the first blocking agent was not used. As the blocking agent, only DMP was added to the isocyanurate derivative of hexamethylene diisocyanate (HDI). The amount of DMP added was 100 mol relative to 100 mol of the isocyanate group of the isocyanurate derivative of HDI.

Comparative Example 7

In the same manner as in Example 15, an aqueous dispersion of the water-dispersible blocked isocyanate was prepared.

In Comparative Example 7, as shown in Table 3, neither the first blocking agent nor acid was used.

As the blocking agent, only DMP was added to the isocyanurate derivative of HDI.

The amount of DMP added was 98 mol relative to 100 mol of the isocyanate group of the isocyanurate derivative of HDI.

<Synthesis of polyurethane resin>

Synthesis Example 1

At room temperature (25°C), in a 3 L-reactor equipped with a mixer, a thermometer, a condenser, and a nitrogen gas inlet tube, 703.3 parts by mass of polytetramethylene ether glycol (trade name: PTG-2000SN, manufactured by Hodogaya Chemical Co., Ltd.), 52.8 parts by mass of triethylene glycol (manufactured by Tokyo Chemical Industry Co., Ltd.), 144.6 parts by mass of N-methyldiethanolamine (manufactured by Tokyo Chemical Industry Co., Ltd.), and 293.3 parts by mass of acetonitrile were charged, and the charged mixture was stirred at a liquid temperature of 40°C or less for 30 minutes.

Then, 346.1 parts by mass of 1,3-bis(isocyanatomethyl)cyclohexane (trade name: TAKENATE (registered trademark) 600, manufactured by Mitsui Chemicals, Inc.) was added to the reactor. Then, 1,3-bis(isocyanatomethyl)cyclohexane, polytetramethylene ether glycol, triethylene glycol, and N-methyldiethanolamine were allowed to react for 30 minutes.

Thereafter, 0.4 parts by mass of stannous octoate (trade name: STANOCT, manufactured by Mitsubishi Chemical Corporation) was added to the reactor, and the reactor was warmed to a liquid temperature of 75°C. Then, 1,3-bis(isocyanatomethyl)cyclohexane, polytetramethylene ether glycol, triethylene glycol, and N-methyldiethanolamine were allowed to react at a liquid temperature of 75°C for 3 hours. Thereafter, FT-IR spectrum was measured to confirm that the isocyanate group reacted. In this manner, a polyurethane resin 1 was produced.

Thereafter, the reaction solution containing the polyurethane resin 1 was cooled to room temperature (25°C), 72.9 parts by mass of acetic acid, and 586.7 parts by mass of acetonitrile were added to the reaction solution, and the added mixture was stirred for 1 hour. In this manner, an acetonitrile solution of the polyurethane resin 1 was obtained.

Then, 4431.8 parts by mass of water that had been cooled to 15°C to 25°C was charged in a 20 L SUS container, and 2083.3 parts by mass of the acetonitrile solution of the polyurethane resin 1 was added to the cooled water and emulsified with stirring by a homomixer.

Then, under reduced pressure, acetonitrile (solvent) was distilled off from the emulsion and a portion of the water was also distilled off.

In this manner, an aqueous dispersion of the polyurethane resin 1 was prepared. The aqueous dispersion of the polyurethane resin 1 had a solids concentration of 26.2 mass%.

Synthesis Example 2

At room temperature (25°C), in a 1 L-reactor equipped with a mixer, a thermometer, a condenser, and a nitrogen gas inlet tube, 291.1 parts by mass of polycarbonate diol (trade name: DURANOL T-6002, manufactured by Asahi Kasei

Corporation), 15.5 parts by mass of N-methyldiethanolamine (manufactured by Tokyo Chemical Industry Co., Ltd.), and 54.5 parts by mass of acetonitrile were charged, and the charged mixture was stirred at a liquid temperature of 60°C for 1 hour.

Then, 74.8 parts by mass of 1,3-bis(isocyanatomethyl)cyclohexane (trade name: TAKENATE (registered trademark) 600, manufactured by Mitsui Chemicals, Inc.) was added to the reactor, and the reactor was warmed to a liquid temperature of 80°C. Thus, 1,3-bis(isocyanatomethyl)cyclohexane, polycarbonate diol, and N-methyldiethanolamine were allowed to react to produce a polyurethane resin 2. The amine equivalent was measured every hour to determine the reaction rate of the isocyanate group.

Thereafter, when the reaction rate reached 99.5% or more, the reaction solution was cooled to room temperature (25°C). Then, 27.3 parts by mass of acetic acid and 217.9 parts by mass of acetonitrile were added to the reaction solution, and the added mixture was stirred for 1 hour. In this manner, an acetonitrile solution of the polyurethane resin 2 was obtained.

Thereafter, 970 parts by mass of water that had been cooled to 15°C to 25°C was added to the reactor, and the added mixture was stirred and emulsified.

Then, under reduced pressure, acetonitrile (solvent) was distilled off from the emulsion and a portion of the water was also distilled off.

In this manner, an aqueous dispersion of the polyurethane resin 2 was prepared. The aqueous dispersion of the polyurethane resin 2 had a solids concentration of 32.5 mass%.

<Evaluation>

1. Water dispersibility of water-dispersible blocked isocyanate

As described in Examples and Comparative Examples described above, water was added to the reaction solution containing the water-dispersible blocked isocyanate, and the reaction solution and water were stirred and emulsified by a homomixer. The dispersibility of the reaction solution in water at this time was evaluated as water dispersibility of the water-dispersible blocked isocyanate according to the following criteria. The results are shown in Tables 1 to 5.

> Excellent: The reaction solution containing the water-dispersible blocked isocyanate is rapidly dispersed in water.
> Good: The reaction solution containing the water-dispersible blocked isocyanate is dispersed in water by stirring for a long time (0.5 hours or more).
> Bad: The reaction solution containing the water-dispersible blocked isocyanate is not dispersed in water. Precipitation occurs.

2. Viscosity of aqueous dispersion of water-dispersible blocked isocyanate

The aqueous dispersion of the water-dispersible blocked isocyanate prepared in each Examples and Comparative Examples was brought to 25°C in a constant-temperature water bath, and thereafter, the viscosity of the aqueous dispersion was measured by a rotary viscometer RB-85 (manufactured by Toki Sangyo Co., Ltd.). The results are shown in Tables 1 to 5.

3. pH of aqueous dispersion of water-dispersible blocked isocyanate

The pH of the aqueous dispersion of the water-dispersible blocked isocyanate prepared in each Examples and Comparative Examples was measured by a pH meter (manufactured by HORIBA, Ltd.). The results are shown in Tables 1 to 5.

4. Particle size of aqueous dispersion of water-dispersible blocked isocyanate

The particle size in the aqueous dispersion of the water-dispersible blocked isocyanate prepared in each Examples and Comparative Examples was measured by a Fiber-Optics Particle Analyzer FPAR-1000 (manufactured by Otsuka Electronics Co., Ltd.). The results are shown in Tables 1 to 5.

5. Storage stability of aqueous dispersion of water-dispersible blocked isocyanate

The aqueous dispersion of the water-dispersible blocked isocyanate prepared in each Examples and Comparative Examples was stored in a container. The aqueous dispersion of the water-dispersible blocked isocyanate was then

allowed to stand at 40°C for 7 days. Thereafter, the storage stability of the aqueous dispersion was visually evaluated with five grades according to the following criteria. The results are shown in Tables 1 to 5.

In Examples 2 to 3 and Examples 19 to 29, the aqueous dispersion of the water-dispersible blocked isocyanate was allowed to stand at 40°C for 30 days in the above-described manner. Thereafter, the storage stability of the aqueous dispersion was visually evaluated with five grades according to the following criteria. The results are shown in Tables 4 to 5. In the following evaluations, a higher number is better on a scale of 1 to 5.

5: No precipitation in the aqueous dispersion and no deposit on the wall surface of the container.
4: No precipitation in the aqueous dispersion, but very few deposits on the wall surface of the container.
3: No precipitation in the aqueous dispersion, but deposits on the wall surface of the container.
2: Slight precipitation in the aqueous dispersion, and deposits on the wall surface of the container.
1: Precipitation in the aqueous dispersion, and deposits on the wall surface of the container.

6. Curing properties of water-dispersible blocked isocyanate

The aqueous dispersion (polyisocyanate component) of the water-dispersible blocked isocyanate prepared in each Examples and Comparative Examples and the aqueous dispersion (polyol component) of the polyurethane resin 1 synthesized in Synthesis Example 1 were mixed. The mass ratio of the solid content of the aqueous dispersion of the water-dispersible blocked isocyanate relative to the solid content of the aqueous dispersion of the polyurethane resin 1 was 1/6.

Thereafter, water was added to the mixed dispersion of the aqueous dispersion of the water-dispersible blocked isocyanate and the aqueous dispersion of the polyurethane resin 1 to adjust the final solids concentration to 20 mass%.

Further, a leveling agent (trade name: BYK-348, manufactured by BYK JAPAN KK) was added to the mixed dispersion and stirred for 30 minutes. The amount of the leveling agent added was 0.5 parts by mass relative to 100 parts by mass of the mixed dispersion.

Thus, a curing evaluation liquid was prepared.

Then, a coating of the curing evaluation liquid was applied to a polypropylene base material. Thereafter, the coating film of the curing evaluation liquid was cured at 110°C or 120°C for 30 minutes. The mass of the cured coating film was measured, and such film was immersed in a mixed solvent of acetone and methanol at a mass ratio of 1:1 for 24 hours.

Thereafter, a gel portion was taken out by filtration, and then dried at 110°C for 3 hours, and the mass of the immersed coating film was measured. The gel fraction was then calculated from the following formula. The mass of the cured coating film before immersed in the mixed solvent was referred to as mass A, and the mass of the cured coating film after immersed in the mixed solvent was referred to as mass B.

$$\text{Gel fraction (\%)} = 100 \times \text{mass B/mass A}$$

The curing properties of the water-dispersible blocked isocyanate when the curing temperature of the coating film was 110°C and the curing properties of the water-dispersible blocked isocyanate when the curing temperature of the coating film was 120°C were evaluated with five grades according to the following criteria. The results are shown in Tables 1 to 5.

5: Gel fraction of 60% or more
4: Gel fraction of 45% or more and less than 60%
3: Gel fraction of 30% or more and less than 45%
2: Gel fraction of 15% or more and less than 30%
1: Gel fraction of 0% or more and less than 15%

7. Rubbing fastness of coating film

(1) Pretreatment

The aqueous dispersion of the water-dispersible blocked isocyanate prepared in each Examples and Comparative Examples, the aqueous dispersion of the polyurethane resin 2 prepared in Synthesis Example 2, and isopropyl alcohol were mixed. The aqueous dispersion of the water-dispersible blocked isocyanate had a solid content of 0.835 parts by mass. The aqueous dispersion of the polyurethane resin 2 had a solid content of 4.165 parts by mass. The

isopropyl alcohol was added in an amount of 5 parts by mass.

Thereafter, water was added to the mixed dispersion of the aqueous dispersion of the water-dispersible blocked isocyanate, the aqueous dispersion of the polyurethane resin 2, and isopropyl alcohol to adjust the final solids concentration to 5 mass%. Thereafter, the mixed dispersion was stirred for 30 minutes to give a pretreatment liquid.

Then, a cotton cloth (shirting No. 3 in accordance with JIS L0803) cut into a size of 25 cm in length and 3 cm in width was immersed in the pretreatment liquid. Thereafter, the cotton cloth was withdrawn from the pretreatment liquid, sufficiently squeezed, and then dried at ordinary temperature (25°C) for 24 hours in a dark place.

The dried cotton cloth was dried in a heating furnace of a temperature of 110°C for 1 minute and used as a pretreated cotton cloth 1. The dried cotton cloth was dried in a heating furnace of a temperature of 150°C for 5 minutes and used as a pretreated cotton cloth 2.

An aqueous dispersion of an aqueous polyurethane resin (trade name: TAKELAC W-6110, manufactured by Mitsui Chemicals, Inc.), a water-based ink (X Color Blue MX, manufactured by Matsui Shikiso Chemical Co., Ltd.), and ethylene glycol were mixed. The aqueous dispersion of the aqueous polyurethane resin had a solid content of 12 parts by mass. The water-based ink had a solid content of 2 parts by mass. The amount of ethylene glycol mixed was 20 parts by mass.

Thereafter, water was added to the liquid mixture of the aqueous dispersion of the aqueous polyurethane resin, the water-based ink, and ethylene glycol to adjust the final solids concentration to 14 mass%. The liquid mixture was stirred for 30 minutes to give an ink liquid.

Then, the pretreated cotton cloth 1 was immersed in the ink liquid. Then, the pretreated cotton cloth 1 was withdrawn from the ink liquid, sufficiently squeezed, and then dried at ordinary temperature (25°C) for 24 hours in a dark place. This cotton cloth was further dried in a heating furnace of a temperature of 110°C for 1 minute and used as an evaluation cotton cloth 1.

The pretreated cotton cloth 2 was immersed in the ink liquid. Then, the pretreated cotton cloth 2 was withdrawn from the ink liquid, sufficiently squeezed, and then dried at ordinary temperature (25°C) for 24 hours in a dark place. This cotton cloth was further dried in a heating furnace of a temperature of 150°C for 5 minutes and used as an evaluation cotton cloth 2.

The evaluation cotton cloth 1 or 2 was placed in a rubbing fastness tester, a wetted cotton rubbing cloth (shirting No. 3 in accordance with JIS L0803) was attached to the rubbing fastness tester, and a rubbing fastness test was performed in wet condition in accordance with JIS L0849.

The cotton rubbing cloth was taken out and dried at ordinary temperature (25°C) for 24 hours in a dark place. At this time, the cotton rubbing cloth that had rubbed the evaluation cotton cloth 1 was used as a contaminated cotton cloth 1, and the cotton rubbing cloth that had rubbed the evaluation cotton cloth 2 was used as a contaminated cotton cloth 2.

The extent of staining on the contaminated cotton cloth was converted into numerical values by measuring L* values using a spectral color-difference meter (type: SE-2000, manufactured by Nippon Denshoku Industries, Co., Ltd.). The rubbing fastness 1 of the coating film was evaluated using the L* value of the contaminated cotton cloth 1 with five grades according to the following criteria. In the evaluation of the rubbing fastness 1, a higher number is better on a scale of 1 to 5. The results are shown in Tables 1 to 5.

5: 86 or more.
4: 84 or more and less than 86.
3: 82 or more and less than 84.
2: 80 or more and less than 82.
1: Less than 80.

The rubbing fastness 2 of the coating film was evaluated using the L* value of the contaminated cotton cloth 2 with five grades according to the following criteria. In the evaluation of the rubbing fastness 2, a higher number is better on a scale of 1 to 5. The results are shown in Tables 1 to 5.

5: 92 or more.
4: 91 or more and less than 92.
3: 90 or more and less than 91.
2: 89 or more and less than 90.
1: Less than 89.

(2) Post treatment

A cotton cloth (shirting No. 3) that had not been pretreated was immersed in the above-described ink liquid.

Then, the cotton cloth was withdrawn from the ink liquid, sufficiently squeezed, and then dried at ordinary temperature (25°C) for 24 hours in a dark place.

Then, the aqueous dispersion of the water-dispersible blocked isocyanate in Example 1 or Comparative Example 7 was applied to the cotton cloth by spraying. The application amount was 0.2 g/$m^2$.

Thereafter, the cotton cloth was subjected to heat treatment to give evaluation cotton cloths 3 to 5.

To be specific, the cotton cloth that had been treated at a heat treatment temperature of 90°C for a heat treatment time of 5 minutes was used as an evaluation cotton cloth 3.

The cotton cloth that had been treated at a heat treatment temperature of 110°C for a heat treatment time of 5 minutes was used as an evaluation cotton cloth 4.

The cotton cloth that had been treated at a heat treatment temperature of 150°C for a heat treatment time of 5 minutes was used as an evaluation cotton cloth 5.

The evaluation cotton cloths 3 to 5 were placed in a rubbing fastness tester, wetted cotton rubbing cloths (shirting No. 3 in accordance with JIS L0803) were attached to the rubbing fastness tester, and a rubbing fastness test was performed in wet condition in accordance with JIS L0849.

The cotton rubbing cloth was taken out and dried at ordinary temperature (25°C) for 24 hours in a dark place. At this time, the cotton rubbing cloth that had rubbed the evaluation cotton cloth 3 was used as a contaminated cotton cloth 3, the cotton rubbing cloth that had rubbed the evaluation cotton cloth 4 was used as a contaminated cotton cloth 4, and the cotton rubbing cloth that had rubbed the evaluation cotton cloth 5 was used as a contaminated cotton cloth 5.

The extent of staining on the contaminated cotton cloth was converted into numerical values by measuring L* values using a spectral color-difference meter (type: SE-2000, manufactured by Nippon Denshoku Industries, Co., Ltd.). The rubbing fastness 3 of the coating film was evaluated using the L* value of the contaminated cotton cloth 3 with five grades according to the following criteria. In the evaluation of the rubbing fastness 3, a higher number is better on a scale of 1 to 5. The results are shown in Table 6.

5: 86 or more.
4: 84 or more and less than 86.
3: 82 or more and less than 84.
2: 80 or more and less than 82.
1: Less than 80.

The rubbing fastness 4 of the coating film was evaluated using the L* value of the contaminated cotton cloth 4 with five grades according to the following criteria. In the evaluation of the rubbing fastness 4, a higher number is better on a scale of 1 to 5. The results are shown in Table 6.

5: 86 or more.
4: 84 or more and less than 86.
3: 82 or more and less than 84.
2: 80 or more and less than 82.
1: Less than 80.

The rubbing fastness 5 of the coating film was evaluated using the L* value of the contaminated cotton cloth 5 with five grades according to the following criteria. In the evaluation of the rubbing fastness 5, a higher number is better on a scale of 1 to 5. The results are shown in Table 6.

5: 92 or more.
4: 91 or more and less than 92.
3: 90 or more and less than 91.
2: 89 or more and less than 90.
1: Less than 89.

8. Water repellency

A fluorine type water- and oil-repellent (fluorine resin, trade name: AsahiGuard AGE061, manufactured by AGC Inc.) and the aqueous dispersion (polyisocyanate component) of the water-dispersible blocked isocyanate prepared in each Examples and Comparative Examples were mixed. The mass ratio of the solid content of the aqueous dispersion of the water-dispersible blocked isocyanate relative to the solid content of the fluorine type water- and oil-repellent was 1/9.

Thereafter, water was added to the liquid mixture of the fluorine type water- and oil-repellent and the aqueous dispersion of the water-dispersible blocked isocyanate and stirred to adjust the final solids concentration to 1 mass%.

Thus, a water repellency evaluation liquid was prepared.

A cotton cloth (shirting No. 3 in accordance with JIS L0803) was immersed in the water repellency evaluation liquid. Then, the cotton cloth was withdrawn from the water repellency evaluation liquid, sufficiently squeezed, and then dried at ordinary temperature (25°C) for 24 hours in a dark place. The dried cotton cloth was then dried in a heating furnace of a temperature of 110°C for 1 minute and washed 10 times with a fully automatic washing machine in accordance with JIS L0217. At this time, 30 g of a powder detergent (trade name: Attack Highly-Active Bio-EX, manufactured by Kao Corporation) was added to 37 L of wash water. The washed cotton cloth was dried at ordinary temperature (25°C) for 24 hours in a dark place and used as a test cloth.

Thereafter, 20 μL of a liquid mixture of water and isopropyl alcohol was added dropwise to the test cloth, and the state of liquid droplets was observed after 3 minutes. The mass ratio of water relative to isopropyl alcohol in the liquid mixture was 9/1.

The water repellency was visually evaluated with five grades according to the following criteria. The results are shown in Tables 1 to 5.

5: The liquid droplets form a spherical shape and no stain remains.
4: The liquid droplet forms a spherical shape and slight stain remains.
3: The liquid droplet forms a spherical shape and stain remains clearly.
2: The liquid droplet forms a spherical shape and stain larger than the diameter of the liquid droplet remains clearly.
1: The liquid droplet has completely soaked into the test cloth.

9. Adhesiveness

The aqueous dispersion of the water-dispersible blocked isocyanate prepared in Example 5 and the aqueous dispersion of the polyurethane resin 1 prepared in Synthesis Example 1 were mixed. The mass ratio of the solid content of the aqueous dispersion of the water-dispersible blocked isocyanate relative to the solid content of the aqueous dispersion of the polyurethane resin 1 was 1/6.

Thereafter, water was added to the mixed dispersion of the aqueous dispersion of the water-dispersible blocked isocyanate and the aqueous dispersion of the polyurethane resin 1 and stirred for 30 minutes to adjust the final solids concentration to 20 mass%. In this manner, a polyurethane adhesive composition was prepared.

Then, a coating of the polyurethane adhesive composition was applied to an ABS base material formed from an acrylonitrile-butadiene-styrene copolymer. Thereafter, the coating film of the polyurethane adhesive composition was cured at 130°C for 30 minutes.

Then, the adhesion property of the cured product of the coating film was evaluated by a cross-cut test based on JIS K5600-5-6. In the above-described cured product of the coating film, all of 25 pieces were firmly adhered without peeling from the ABS base material in tape peeling (the number of adhered portions/the number of all the portions = 25/25).

Therefore, when the aqueous dispersion of the water-dispersible blocked isocyanate of Example 5 was used as a curing agent, it was confirmed that excellent adhesiveness was exhibited.

10. Antibacterial activity

The antibacterial activities of the water-dispersible blocked isocyanates in Examples 2, 11 to 12, and Comparative Example 7 were evaluated by the following method. The results are shown in Table 7.

<A: Minimum inhibitory concentration (MIC) test>

(1) Preculture

(Test bacterial species)

I. Escherichia coli (E. coli, NBRC-3972, available from Transfer organization Incorporated Administrative Agency National Institute of Technology and Evaluation)
II. Staphylococcus aureus (S. aureus, NBRC-12732, available from Incorporated Administrative Agency National Institute of Technology and Evaluation)

The above-described bacteria I and II are test bacterial species that are cultured at 35±1°C for 20±4 hours using a liquid medium (LB medium, BD Difco (trade name), LB Broth Miller, Becton, Dickinson and Company) that has

been subjected to autoclave sterilization at 121°C for 20 minutes.

(2) Preparation of bacterial liquid

The test bacterial species cultured in the above (1) was suspended in the LB medium that had been subjected to autoclave sterilization at 121°C for 20 minutes, and O. D. (Optical Density) of the bacterial liquid was then measured and adjusted to less than 2.0.

(3) Sample preparation

A dimethyl sulfoxide solution (sample) containing 3% of the water-dispersible blocked isocyanate was prepared, and the sample was added to the LB medium that had been subjected to autoclave sterilization at 121°C for 20 minutes, to thereby obtain a liquid mixture. The maximum concentration of the water-dispersible blocked isocyanate was set to 1000 ppm, and a two-fold dilution series in eight stages was made.

(4) MIC measurement test

The bacterial liquid prepared in (2) was inoculated to each of the dilution series in (3), and cultured at 35°C for 24±2 hours. Thereafter, the growth of bacteria was visually confirmed, and the maximum dilution concentration that inhibits growth was determined as an MIC value.

<B: Film test>

(Test bacterial species)

Escherichia Coli (E. coli, NBRC-3972, available from Transfer organization Incorporated Administrative Agency National Institute of Technology and Evaluation)

Referring to "Antibacterial products - Test for antibacterial activity and efficacy" established by JIS Z 2801:2010, the antibacterial activity against Staphylococcus aureus was evaluated as follows.

(1) Mixed were 1.8 parts by mass (based on solids) of the water-dispersible blocked isocyanate, 88.2 parts by mass (based on solids) of TAKELAC W-6355 (trade name, aqueous polyurethane resin, manufactured by Mitsui Chemicals, Inc.), and 10.0 parts by mass of isopropyl alcohol to give a liquid mixture. Further, water was added to the liquid mixture to adjust the solids concentration of the liquid mixture to 10 mass%.

Then, a coating of the above-described liquid mixture was applied onto a polyethylene terephthalate film (trade name: Lumirror S10, manufactured by Toray Industries, Inc.) using a bar coater, and the coating film was heated under the curing conditions (temperature and time) described in Table 7, thereby being cured. Thus, a film having a film thickness of 0.1 to 2.0 μm was obtained.

(2) The film was cut into a 50±2 mm-square piece to give a test piece. The test piece was placed on a sterile plastic petri dish, and 0.4 mL of a test bacterial liquid (bacterial count: $2.5 \times 10^5$ to $10 \times 10^5$ pieces/mL) was inoculated. The test bacterial liquid was prepared by the following method.

That is, cultures were precultured in an LB medium (BD Difco (trade name), LB Broth Miller, Becton, Dickinson and Company) in an incubator at a temperature of 35±1°C for 20±4 hours (first liquid).

Then, the first liquid was further inoculated into a slant medium (normal agar medium, Nutrient agar, Merck), and precultured in an incubator at a temperature of 35±1°C for 20±4 hours (second liquid).

Thereafter, the concentration of the second liquid was appropriately adjusted in a 1/500 normal broth medium (Nutrient broth, Merck) that had been separately prepared (third liquid).

(3) In contrast, as a control sample, a 50±2 mm-square polyethylene terephthalate film (trade name: Lumirror, manufactured by Toray Industries, Inc.) was prepared, and a test bacterial liquid was inoculated in the same manner as the test piece.

(4) Then, a 40±2 mm-square biaxially oriented polypropylene (OPP) film was covered on the inoculated test bacterial liquid, thereby allowing the test bacterial liquid to be uniformly inoculated on the entire film. Thereafter, the bacteria were cultured at a temperature of 35±1°C and a relative humidity of 85±5% for 20±4 hours.

(5) Immediately after inoculation of the test bacterial liquid, or after the culturing in the above (4), 10 mL of a SCDLP medium (SCDLP medium DAIGO (trade name), manufactured by NIHON PHARMACEUTICAL CO., LTD) was added thereto, the test bacterial liquid on the test piece was washed 4 times to completely collect the bacterial liquid. The collected liquid (washing-out liquid) was rapidly subjected to the next step, and the viable cell count was measured.

(6) The collected liquid (washing-out liquid) in the above (5) and phosphate buffered saline were used to prepare a ten-fold dilution series.

Thereafter, each of the dilution series and a standard agar medium (standard agar medium DAIGO (trade name), product of NIHON PHARMACEUTICAL CO., LTD) were mixed to make a medium. The medium was cultured at a temperature of 35±1°C for 20±4 hours, and the colony count was determined. The petri dish of the dilution series in which 30 to 300 colonies appeared was used as an object to be counted.

(7) Based on the measurement results, the viable cell count was determined using the following formula.

$$N = C \times D \times V/A$$

N : Viable cell count (per 1 $cm^2$ of test piece)
C: Colony count
D: Dilution magnification (dilution magnification of each diluent in the adopted petri dish)
V: Liquid volume (mL) of SCDLP medium used for washing out
A: Surface area of coating film ($cm^2$)

(8) The antibacterial activity value was calculated using the following formula, and when R was 2.0 or more, an antibacterial activity exists (good). When R was less than 2.0, there was no antibacterial activity (bad).

$$R = (Ut - U0) - (At - U0) = Ut - At$$

R: Antibacterial activity value
U0: Average of the logarithmic values of the viable cell count immediately after inoculation of the unprocessed test piece
Ut: Average of the logarithmic values of the viable cell count of the unprocessed test piece after 24 hours
At: Average of the logarithmic values of the viable cell count of the antibacterial-processed test piece after 24 hours

[Table 1]

Table 1

| No. | | Ex 1 | Ex 2 | Ex 3 | Ex 4 | Ex 5 | Ex 6 | Ex 7 | Ex 8 | Ex 9 | Ex 10 | Ex 11 |
|---|---|---|---|---|---|---|---|---|---|---|---|---|
| First blocking agent (mol/100 mol of NCO of HDI isocyanurate) | TMG | 30 | 20 | 10 | 20 | 20 | 20 | 80 | 70 | 60 | 3 | 5 |
| | TABD | - | - | - | - | - | - | - | - | - | - | - |
| | DMAE | - | - | - | - | - | - | - | - | - | - | - |
| | MPZ | - | | | | | | | | | | |
| | MHPZ | - | - | - | - | - | - | - | - | - | - | - |
| | DBU | - | - | - | - | - | - | - | - | - | - | - |
| | TMEDA | - | - | - | - | - | - | - | - | - | - | - |
| Second blocking agent (mol/100 mol of NCO of HDI isocyanurate) | DMP | 70 | 80 | 90 | 80 | 80 | 80 | 20 | 30 | 40 | 97 | 95 |
| Hydrophilic compound having active hydrogen group (mol/100 mol of NCO of HDI isocyanurate) | Methoxy PEG 1000 | - | - | - | - | - | - | | - | - | - | - |
| Acid (eq./First blocking agent) | Acetic acid | 2 | 2 | 2 | 1.5 | 1 | 0.5 | 2 | 2 | 2 | 2 | 2 |
| | Propionic acid | - | - | - | - | - | - | - | - | - | - | - |
| | Lactic acid | - | - | - | - | - | - | - | - | - | - | - |
| Ionicity of hydrophilic moiety | | Cationic | Cationic | Cationic | Cationic | Cationic | Cationic | Cationic | Cationic | Cationic | Cationic | Cationic |

(continued)

| No. | | Ex 1 | Ex 2 | Ex 3 | Ex 4 | Ex 5 | Ex 6 | Ex 7 | Ex 8 | Ex 9 | Ex 10 | Ex 11 |
|---|---|---|---|---|---|---|---|---|---|---|---|---|
| Liquid properties of water dispersion | Water dispersibility | Excellent | Excellent | Excellent | Excellent | Excellent | Excellent | Excellent | Excellent | Excellent | Good | Excellent |
| | Viscosity (mPa·s) | 16 | 19 | 17 | 24 | 14 | 16 | 14 | 13 | 13 | 12 | 11 |
| | pH | 4.7 | 4.8 | 5.0 | 5.3 | 5.8 | 7.3 | 4.8 | 4.8 | 4.8 | 4.9 | 4.9 |
| | Particle size (nm) | 12 | 21 | 49 | 66 | 52 | 49 | 22 | 51 | 105 | 198 | 138 |
| | Storage stability | 3 | 5 | 5 | 5 | 5 | 5 | 3 | 3 | 3 | 2 | 3 |
| Property evaluation | Gel fraction at 110°C | 2 | 2 | 3 | 3 | 3 | 3 | 1 | 2 | 2 | 3 | 3 |
| | Gel fraction at 120°C | 4 | 4 | 5 | 5 | 4 | 5 | 3 | 3 | 3 | 5 | 5 |
| | Rubbing fastness 1 | 4 | 5 | 5 | 5 | 5 | 4 | 3 | 3 | 3 | 3 | 4 |
| | Rubbing fastness 2 | 4 | 5 | 5 | 5 | 5 | 3 | 3 | 3 | 4 | 4 | 4 |
| | Water repellency after washing | 4 | 4 | 5 | 4 | 4 | 4 | 2 | 2 | 3 | 5 | 5 |

[Table 2]

Table 2

| No. | | Ex 12 | Ex 13 | Ex 14 | Ex 15 | Ex 16 | Ex 17 | Ex 18 |
|---|---|---|---|---|---|---|---|---|
| First blocking agent (mol/100 mol of NCO of HDI isocyanurate) | TMG | 100 | 20 | 20 | 2 | 2 | 18 | - |
| | TABD | - | - | - | - | - | - | 20 |
| | DMAE | - | - | - | - | - | - | - |
| | MPZ | - | - | - | - | - | - | - |
| | MHPZ | - | - | - | - | - | - | - |
| | DBU | - | - | - | - | - | - | - |
| | TMEDA | - | - | - | - | - | - | - |
| Second blocking agent (mol/100 mol of NCO of HDI isocyanurate) | DMP | 0 | 80 | 80 | 96 | 95 | 80 | 80 |
| Hydrophilic compound having active hydrogen group (mol/100 mol of NCO of HDI isocyanurate) | Methoxy PEG 1000 | - | - | - | 2 | 3 | 2 | - |
| Acid (eq./First blocking agent) | Acetic acid | 2 | - | - | 2 | 2 | 2 | 1 |
| | Propionic acid | - | 1 | - | - | - | - | - |
| | Lactic acid | - | - | 1 | - | - | - | - |
| Ionicity of hydrophilic moiety | | Cationic | Cationic | Cationic | Cationic Nonionic | Cationic Nonionic | Cationic Nonionic | Cationic |
| Liquid properties of water dispersion | Water dispersibility | Excellent | Excellent | Excellent | Good | Excellent | Excellent | Excellent |
| | Viscosity (mPa·s) | 11 | 24 | 13 | 12 | 12 | 22 | 24 |
| | pH | 4.8 | 6.0 | 6.9 | 4.8 | 4.7 | 4.6 | 6.9 |
| | Particle size (nm) | Dissolved | 46 | 56 | 207 | 155 | 37 | 18 |
| | Storage stability | 3 | 5 | 5 | 2 | 3 | 5 | 5 |

(continued)

| No. | | Ex 12 | Ex 13 | Ex 14 | Ex 15 | Ex 16 | Ex 17 | Ex 18 |
|---|---|---|---|---|---|---|---|---|
| Property evaluation | Gel fraction at 110°C | 1 | 4 | 2 | 4 | 4 | 4 | 1 |
| | Gel fraction at 120°C | 2 | 5 | 4 | 5 | 5 | 5 | 2 |
| | Rubbing fastness 1 | 2 | 5 | 5 | 4 | 4 | 4 | 3 |
| | Rubbing fastness 2 | 3 | 5 | 5 | 4 | 4 | 4 | 4 |
| | Water repellency after washing | 2 | 4 | 4 | 3 | 3 | 3 | 2 |

[Table 3]

Table 3

| No. | | Comp. Ex 1 | Comp. Ex 2 | Comp. Ex 3 | Comp. Ex 4 | Comp. Ex 5 | Comp. Ex 6 | Comp. Ex 7 |
|---|---|---|---|---|---|---|---|---|
| First blocking agent (mol / 100 mol of NCO of HDI isocyanurate) | TMG | - | - | - | | - | - | |
| | TABD | - | - | - | - | - | - | - |
| | DMAE | 20 | - | | | - - | - - | |
| | MPZ | - | 20 | - | - | - | - | - |
| | MHPZ | - | - | 20 | - | - | - | - |
| | DBU | - | - | - | 20 | - | - | - |
| | TMEDA | - | - | - | - | 20 | - | - |
| Second blocking agent (mol / 100 mol of NCO of HDI isocyanurate) | DMP | 80 | 80 | 80 | 80 | 80 | 100 | 98 |
| Hydrophilic compound having active hydrogen group (mol / 100 mol of NCO of HDI isocyanurate) | Methoxy PEG 1000 | - | - | - | - | - | - | 2 |
| Acid (eq./First blocking agent) | Acetic acid | 1 | 1 | 1 | 1 | 1 | 1 | - |
| | Propionic acid | - | - | - | - | - | - | - |
| | Lactic acid | | | | - - | - - | - - | - |
| Ionicity of hydrophilic moiety | | Cationic | Cationic | Cationic | Cationic | Cationic | - | Nonionic |
| Liquid properties of water dispersion | Water dispersibility | Excellent | Excellent | Excellent | Bad | Excellent | Bad | Good |
| | Viscosity (mPa·s) | 14 | 19 | is | - | 18 | - | 24 |
| | pH | 5.6 | 5.4 | 5.9 | - | 6.2 | - | 6.8 |
| | Panicle size (nm) | 49 | 226 | 128 | - | 203 | - | 303 |
| | Storage stability | 5 | 1 | 1 | - | 1 | - | 2 |

(continued)

| No. | | Comp. Ex 1 | Comp. Ex 2 | Comp. Ex 3 | Comp. Ex 4 | Comp. Ex 5 | Comp. Ex 6 | Comp. Ex 7 |
|---|---|---|---|---|---|---|---|---|
| Property evaluation | Gel fraction at 110°C | 1 | 1 | 1 | - | 1 | - | 1 |
| | Gel fraction at 120°C | 1 | 1 | 1 | - | 1 | - | 1 |
| | Rubbing fastness 1 | 3 | 3 | 2 | - | 3 | - | 3 |
| | Rubbing fastness 2 | 3 | 5 | 4 | - | 3 | - | 4 |
| | Water repellency after washing | 1 | 1 | 1 | - | 1 | - | 1 |

[Table 4]

Table 4

| No. | | Ex 2 | Ex 3 | Ex 19 | Ex 20 | Ex 21 | Ex 22 | Ex 23 | Ex 24 |
|---|---|---|---|---|---|---|---|---|---|
| Polyisocyanate compound | Trade name | TAKENATE D-170N | TAKENATE D-170N | TAKENATE D-160N | TAKENATE D-165N | TAKENATE D-178NL | TAKENATE D-120N | TAKENATE D-120N | TAKENATE D-127N |
| | Type of isocyanate | HDI | HDI | HDI | HDI | HDI | 1,3-$H_6$XDI | 1,3-$H_6$XDI | 1,3-$H_6$XDI |
| | Modified form | Isocyanurate | Isocyanurate | TMP adduct | Biuret | Allophanate | TMP adduct | TMP adduct | Isocyanurate |
| First blocking agent (mol/100 mol of NCO of isocyanurate component) | TMG | 20 | 10 | 20 | 20 | 20 | 20 | 10 | 10 |
| Second blocking agent (mol/100 mol of NCO of isocyanurate component) | DMP | 80 | 90 | 80 | 80 | 80 | 80 | 90 | 90 |
| Acid (eq./First blocking agent) | Acetic acid | 2 | 2 | 2 | 2 | 2 | 2 | 2 | 2 |
| Jonicity of hydrophilic moiety | | Cationic | Cationic | Cationic | Cationic | Cationic | Cationic | Cationic | Cationic |

(continued)

| No. | | Ex 2 | Ex 3 | Ex 19 | Ex 20 | Ex 21 | Ex 22 | Ex 23 | Ex 24 |
|---|---|---|---|---|---|---|---|---|---|
| Liquid properties of water dispersion | Water dispersibility | Excellent | Excellent | Excellent | Excellent | Excellent | Excellent | Excellent | Excellent |
| | Viscosity (mPa s) | 19 | 17 | 45 | 15 | 20 | 22 | 21 | 12 |
| | pH | 4.8 | 5.0 | 4.9 | 4.7 | 4.6 | 4.8 | 4.9 | 4.7 |
| | Particle size (nm) | 21 | 49 | 54 | 119 | 277 | 21 | 137 | 81 |
| | Storage stability (40°C, 7 days) | 5 | 5 | 5 | 5 | 5 | 5 | 5 | 5 |
| | Storage stability (40°C, 30 days) | 5 | 5 | 3 | 3 | 2 | 4 | 4 | 5 |
| Property evaluation | Gel fraction at 110°C | 2 | 3 | 2 | 2 | 2 | 2 | 3 | 3 |
| | Gel fraction at 120°C | 4 | 5 | 4 | 4 | 4 | 4 | 5 | 5 |
| | Rubbing fastness 1 | 5 | 5 | 3 | 5 | 5 | 4 | 5 | 5 |
| | Rubbing fastness 2 | 5 | 5 | 4 | 5 | 5 | 5 | 5 | 5 |
| | Water repellency after washing | 4 | 5 | 4 | 4 | 4 | 5 | 5 | 5 |

[Table 5]

Table 5

| No. | | Ex 25 | Ex 26 | Ex 27 | Ex 28 | Ex 29 | Ex 30 |
|---|---|---|---|---|---|---|---|
| Polyisocyanate compound | Trade name | TAKENATE D-110N | TAKENATE D-131N | TAKENATE D-131N | TAKENATE D-103H | TAKENATE D-204 | STABiO D-370N |
| | Type of isocyanate | XDI | XDI | XDI | TDI | TDI | PDI |
| | Modified form | TMP adduct | Isocyanurate | Isocyanurate | TMP adduct | Isocyanurate | Isocyanurate |
| First blocking agent (mol/100 mol of NCO of isocyanurate component) | TMG | 10 | 20 | 10 | 20 | 20 | 20 |
| Second blocking agent (mol/100 mol of NCO of isocyanurate component) | DMP | 90 | 80 | 90 | 80 | 80 | 80 |
| Acid (eq./First blocking agent) | Acetic acid | 2 | 2 | 2 | 2 | 2 | 2 |
| Ionicity of hydrophilic moiety | | Cationic | Cationic | Cationic | Cationic | Cationic | Cationic |
| Liquid properties of water dispersion | Water dispersibility | Excellent | Excellent | Excellent | Excellent | Excellent | Excellent |
| | Viscosity (mPa·s) | 12 | 9 | 8 | 11 | 7 | 10 |
| | pH | 4.7 | 4.8 | 5.2 | 4.4 | 4.4 | 4.7 |
| | Particle size (nm) | 159 | 48 | 132 | 224 | 174 | 201 |
| | Storage stability (40°C, 7 days) | 5 | 5 | 5 | 5 | 5 | 5 |
| | Storage stability (40°C, 30 days) | 4 | 5 | 5 | 2 | 4 | 5 |
| Property evaluation | Gel fraction at 110°C | 5 | 5 | 5 | 5 | 5 | 2 |
| | Gel fraction at 120°C | 5 | 5 | 5 | 5 | 5 | 4 |
| | Rubbing fastness 1 | 5 | 5 | 5 | 3 | 4 | 5 |
| | Rubbing fastness 2 | 5 | 5 | 5 | 4 | 4 | 5 |
| | Water repellency after washing | 5 | 5 | 5 | 5 | 5 | 4 |

[Table 6]

Table 6

| No. | | Ex 1 | Comp. Ex 7 |
|---|---|---|---|
| Isocyanate component | Trade name | TAKENATE D-170N | TAKENATE D-170N |
| | Type of isocyanate | HDI | HDI |
| | Modified form | Isocyanurate | Isocyanurate |
| First blocking agent (mol/100 mol of NCO of isocyanurate component) | TMG | 20 | 0 |
| Second blocking agent (mol/100 mol of NCO of isocyanurate component) | DMP | 80 | 98 |
| Hydrophilic compound having active hydrogen group (mol/100 mol of NCO of HDI isocyanurate) | Methoxy PEG 1000 | 0 | 2 |
| Ionicity of hydrophilic moiety | | Cationic | Nonionic |
| Property evaluation | Rubbing fastness 3 | 2 | 1 |
| | Rubbing fastness 4 | 5 | 3 |
| | Rubbing fastness 5 | 5 | 4 |

[Table 7]

Table 7

| No. | | Ex 12 | Ex 2 | Ex 11 | Comp. Ex 7 |
|---|---|---|---|---|---|
| First blocking agent (mol/100 mol of NCO of HDI isocyanurate) | TMG | 100 | 20 | 5 | - |
| | TABD | - | - | - | - |
| | DMAE | - | - | - | - |
| | MPZ | - | - | - | - |
| | MHPZ | - | - | - | - |
| | DBU | - | - | - | - |
| | TMEDA | - | - | - | - |
| Second blocking agent (mol/100 mol of NCO of HDI isocyanurate) | DMP | 0 | 80 | 95 | 98 |
| Hydrophilic compound having active hydrogen group (mol/100 mol of NCO of HDI isocyanurate) | Methoxy PEG 1000 | - | - | - | 2 |

(continued)

| No. | | Ex 12 | Ex 2 | | | Ex 11 | Comp. Ex 7 |
|---|---|---|---|---|---|---|---|
| Acid (eq./First blocking agent) | Acetic acid | 2 | 2 | | | 2 | - |
| | Propionic acid | - | - | | | - | - |
| | Lactic acid | - | - | | | - | - |
| Ionicity of hydrophilic moiety | | Cationic | Cationic | | | Cationic | Nonionic |
| Antibacterial activity | MIC test E.coli | 250 | > 1000 | | | 500 or more and 1000 or less | > 1000 |
| | MIC test S.aureus | 16 | 125 | | | 500 | > 1000 |
| | Film curing temperature | 150°C | 150°C | 110°C | 170°C | 150°C | 150°C |
| | Film curing time | 2 min. | 2 min. | 2 min. | 2 min. | 2 min. | 2 min. |
| | Film test | Good | Good | Good | Good | Good | Bad |

The details of the abbreviations in the tables are given in the following.

TAKENATE D-170N: HDI isocyanurate: isocyanurate derivative of hexamethylene diisocyanate, trade name: TAKENATE (registered trademark) D-170N, isocyanate group content: 20.7%, manufactured by Mitsui Chemicals, Inc.,
TAKENATE D-160N: Trimethylolpropane (TMP) adduct derivative of HDI, polyisocyanate compound, trade name: TAKENATE (registered trademark) D-160N, solid content: 75 mass%, isocyanate group content: 12.6%, manufactured by Mitsui Chemicals, Inc.,
TAKENATE D-165N: Biuret derivative of HDI, polyisocyanate compound, trade name: TAKENATE (registered trademark) D-165N, solid content: 100 mass%, isocyanate group content: 23.3%, manufactured by Mitsui Chemicals, Inc.,
TAKENATE D-178NL: Allophanate derivative of HDI, polyisocyanate compound, trade name: TAKENATE (registered trademark) D-178NL, solid content: 100 mass%, isocyanate group content: 19.2%, manufactured by Mitsui Chemicals, Inc.,
TAKENATE D-120N: TMP adduct derivative of 1,3-bis(isocyanatomethyl)cyclohexane (1,3-$H_6$XDI), polyisocyanate compound, trade name: TAKENATE (registered trademark) D-120N, solid content: 75 mass%, isocyanate group content: 11.0%, manufactured by Mitsui Chemicals, Inc.,
TAKENATE D-127N: Isocyanurate derivative of 1,3-$H_6$XDI, polyisocyanate compound, trade name: TAKENATE (registered trademark) D-127N, solid content: 75 mass%, isocyanate group content: 13.5%, manufactured by Mitsui Chemicals, Inc.,
TAKENATE D-110N: TMP adduct derivative of xylylene diisocyanate (XDI), polyisocyanate compound, trade name: TAKENATE (registered trademark) D-110N, solid content: 75 mass%, isocyanate group content: 11.5%, manufactured by Mitsui Chemicals, Inc.,
TAKENATE D-131N: Isocyanurate derivative of XDI, polyisocyanate compound, trade name: TAKENATE (registered trademark) D-131N, solid content: 75 mass%, isocyanate group content: 13.7%, manufactured by Mitsui Chemicals, Inc.,
TAKENATE D-103H: TMP adduct derivative of tolylene diisocyanate (TDI), polyisocyanate compound, trade name: TAKENATE (registered trademark) D-103H, solid content: 75 mass%, isocyanate group content: 13.0%, manufactured by Mitsui Chemicals, Inc.,
TAKENATE D-204: Isocyanurate derivative of TDI, polyisocyanate compound, trade name: TAKENATE (registered trademark) D-204, solid content: 50 mass%, isocyanate group content: 7.5%, manufactured by Mitsui Chemicals, Inc.,
STABiO D-370N: Isocyanurate of PDI, polyisocyanate compound, trade name: STABiO (registered trademark) D-370N, solid content: 100 mass%, isocyanate group content: 25%, manufactured by Mitsui Chemicals, Inc.,
TMG: 1,1,3,3-tetramethylguanidine,
TABD: 1,5,7-triazabicyclo[4.4.0]dec-5-ene,

DMAE: dimethylaminoethanol,
MPZ: N-methyl piperazine,
MHPZ: N-methylhomopiperazine,
DBU: 1,8-diazabicyclo[5.4.0]-7-undecene,
TMEDA: N,N,N'-trimethylethylenediamine, and
Methoxy PEG 1000: Methoxy PEG #1000, number average molecular weight 1000, manufactured by TOHO Chemical Industry Co., Ltd.

While the illustrative embodiments of the present invention are provided in the above-described invention, such is for illustrative purpose only and it is not to be construed restrictively. Modification and variation of the present invention that will be obvious to those skilled in the art is to be covered by the following claims.

Industrial Applicability

The water-dispersible blocked isocyanate of the present invention can be suitably used in the fields of fiber-treating agents, water repellents, coating compositions, adhesives, and antimicrobial agents.

## Claims

1. A water-dispersible blocked isocyanate, being a blocked isocyanate obtained by blocking an isocyanate group of a polyisocyanate compound with a blocking agent,

   wherein the blocking agent comprises a first blocking agent represented by general formula (1), and
   at least some of the first blocking agent has been neutralized with acid.

   [Chemical Formula 1]

   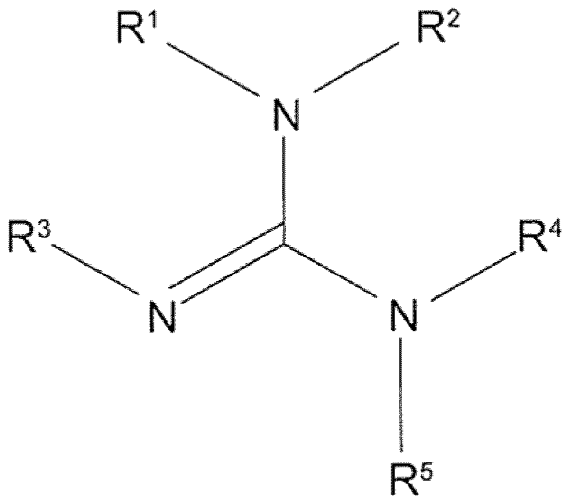

   (1)

   (in the formula, $R^1$ to $R^5$ each represent a hydrogen atom or a hydrocarbon group having 1 to 12 carbon atoms, $R^1$ and $R^3$ may be bonded to each other to form a heterocycle, $R^4$ and $R^1$ may be bonded to each other to form a heterocycle, and $R^5$ and $R^3$ may be bonded to each other to form a heterocycle).

2. The water-dispersible blocked isocyanate according to claim 1, wherein in the general formula (1), $R^1$ to $R^5$ each represent a hydrogen atom or a hydrocarbon group having 1 to 12 carbon atoms.

3. The water-dispersible blocked isocyanate according to claim 1, wherein the blocking agent further comprises a second blocking agent having a lower catalytic activity that activates an isocyanate group than that of the first blocking agent.

**4.** The water-dispersible blocked isocyanate according to claim 3, wherein the first blocking agent in the blocking agent has a content of more than 2 mol% and less than 80 mol%.

**5.** The water-dispersible blocked isocyanate according to any one of claim 1, wherein the acid comprises an organic acid.

**6.** The water-dispersible blocked isocyanate according to claim 5, wherein the acid comprises at least one kind of organic acid selected from the group consisting of acetic acid, propionic acid, and lactic acid.

**7.** The water-dispersible blocked isocyanate according to claim 1, wherein the polyisocyanate compound comprises an aromatic polyisocyanate derivative and/or an araliphatic polyisocyanate derivative.

**8.** A fiber-treating agent comprising the water-dispersible blocked isocyanate according to claim 1.

**9.** A water repellent comprising the water-dispersible blocked isocyanate according to claim 1.

**10.** A coating composition comprising the water-dispersible blocked isocyanate according to claim 1.

**11.** An adhesive comprising the water-dispersible blocked isocyanate according to claim 1.

## INTERNATIONAL SEARCH REPORT

International application No.
**PCT/JP2021/034284**

**A. CLASSIFICATION OF SUBJECT MATTER**

***C09D 5/02***(2006.01)i; ***C09D 175/04***(2006.01)i; ***C09J 175/04***(2006.01)i; ***C08G 18/80***(2006.01)i; ***D06M 13/395***(2006.01)i
FI: C08G18/80 070; C08G18/80 096; D06M13/395; C09D175/04; C09D5/02; C09J175/04

According to International Patent Classification (IPC) or to both national classification and IPC

**B. FIELDS SEARCHED**

Minimum documentation searched (classification system followed by classification symbols)

C09D5/02; C09D175/04; C09J175/04; C08G18/80; D06M13/395

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-82208 A (MITSUI CHEMICALS, INC.) 18 May 2017 (2017-05-18) claims, paragraphs [0023], [0257], example 31 | 1-11 |
| Y | JP 2010-59089 A (ASAHI KASEI CHEMICALS CORP.) 18 March 2010 (2010-03-18) paragraph [0039], example 11 | 1-11 |
| A | JP 2019-137757 A (ASAHI KASEI CORP.) 22 August 2019 (2019-08-22) | 1-11 |
| A | WO 2018/235896 A1 (ASAHI KASEI CORP.) 27 December 2018 (2018-12-27) | 1-11 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 October 2021** | **09 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/034284**

| Patent document cited in search report | Publication date (day/month/year) | Patent family member(s) | Publication date (day/month/year) |
|---|---|---|---|
| JP 2017-82208 A | 18 May 2017 | US 2016/0200858 A1<br>claims, paragraphs [0021], [0254], example 31<br>US 2019/0315910 A1<br>WO 2015/025776 A1<br>EP 3037450 A1<br>EP 3284765 A1 | |
| JP 2010-59089 A | 18 March 2010 | (Family: none) | |
| JP 2019-137757 A | 22 August 2019 | (Family: none) | |
| WO 2018/235896 A1 | 27 December 2018 | CN 110785450 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010059089 A
- JP 2017082208 A